(19) Europäisches Patentamt
European Patent Office
Office européen des brevets

(11) EP 2 687 570 A2

# (12) EUROPEAN PATENT APPLICATION

(43) Date of publication:
**22.01.2014 Bulletin 2014/04**

(51) Int Cl.:
***C09J 7/02*** *(2006.01)*

(21) Application number: **13177167.7**

(22) Date of filing: **19.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.07.2012 JP 2012160179**

(71) Applicant: **NITTO DENKO CORPORATION**
**Osaka 567 (JP)**

(72) Inventors:
- **Satou, Masaaki**
  **Ibaraki-shi, Osaka 567-8680 (JP)**
- **Soeda, Yoshikazu**
  **Ibaraki-shi, Osaka 567-8680 (JP)**
- **Wada, Hiroshi**
  **Ibaraki-shi, Osaka 567-8680 (JP)**

(74) Representative: **Grünecker, Kinkeldey, Stockmair & Schwanhäusser**
**Leopoldstrasse 4**
**80802 München (DE)**

## (54) Pressure-Sensitive Adhesive Sheet, Electric or Electronic Device Member Laminate and Optical Member Laminate

(57) A pressure-sensitive adhesive sheet including a plastic substrate having a thickness of more than 0 μm and less than 2.0 μm and a pressure-sensitive adhesive layer on at least one side of the plastic substrate. The pressure-sensitive adhesive layer contains an acrylic polymer or a rubber-based polymer in an amount of 50 wt% or more relative to a total amount of the pressure-sensitive adhesive layer. The acrylic polymer is formed of a monomer mixture containing the specific alkyl (meth) acrylate monomer in an amount of 50.0 to 99.8 wt% relative to a total amount of monomer components and a polar group-containing monomer in an amount of 0.01 to 20 wt% relative to the total amount of monomer components.

EP 2 687 570 A2

**Description**

BACKGROUND OF THE INVENTION

Technical Field

The present invention relates to a pressure-sensitive adhesive sheet, an electric or electronic device member laminate and an optical member laminate. Precisely, the present invention relates to a pressure-sensitive adhesive sheet which is thin and which satisfies both processability (especially punching processability) and irregularity-followability, an electronic device member laminate having the pressure-sensitive adhesive sheet, and an optical member laminate having the pressure-sensitive adhesive sheet. Further, the present invention relates to a pressure-sensitive adhesive sheet which, even though thin, satisfies both processability (especially punching processability) and irregularity-followability and is excellent in separator releasability, an electronic device member laminate having the pressure-sensitive adhesive sheet, and an optical member laminate having the pressure-sensitive adhesive sheet.

Background Art

Recently, portable devices such as portable telephones, digital cameras, smartphones, PDAs (personal digital assistants) and others are being much downsized. Consequently, various electronic parts to be mounted on these are also being downsized and thinned. For example, the main members to constitute portable telephones and smartphones that are typical portable devices tend to be laminated. In general, the display area of a portable telephone or a smartphone includes mainly an LCD module and a backlight unit, and for expressing the function of light emission, reflection, light interception, light guide or the like, various types of sheet-like members are laminated. Consequently, a pressure-sensitive adhesive tape or sheet for assembling (bonding) these members (hereinafter this may be simply referred to as "pressure-sensitive adhesive tape" or "pressure-sensitive adhesive sheet") has been devised. For example, there is a known double-sided pressure-sensitive adhesive tape or sheet that is thin and has a strength (see Patent Document 1).
Patent Document 1: JP-A 2005-105212

SUMMARY OF THE INVENTION

Recently, with thinning and downsizing of portable devices and with thinning of electronic members to be mounted on portable devices, further ultra-thin pressure-sensitive adhesive sheets have been desired as pressure-sensitive adhesive sheets for assembling (bonding) members.
However, when the pressure-sensitive adhesive sheet is thinned, the pressure-sensitive adhesive sheet is often problematic in that the processability (especially punching processability) thereof would lower and the irregularity-followability thereof would also lower.
In addition, such thinned pressure-sensitive adhesive sheets would have other problems in that, when a separator (release liner) is peeled from the pressure-sensitive adhesive surface (provided by the pressure-sensitive adhesive layer) of the pressure-sensitive adhesive sheet before use, problems such as an erroneous separation phenomenon (a phenomenon such that the separator does not peel at a predetermined interface at which the separator should be originally released in a double-sided pressure-sensitive adhesive sheet, but peels at an interface at which normally the pressure-sensitive adhesive layer should have been kept adhered (stuck) to the pressure-sensitive adhesive surface), removal of pressure-sensitive adhesive layer to the separator (peel of pressure-sensitive adhesive), overlapping of pressure-sensitive adhesive layers, unintentional movement of a pressure-sensitive adhesive layer, wrinkling or twisting of a pressure-sensitive adhesive layer owing to such movement, damage of the pressure-sensitive adhesive sheet, etc. tend to be occurred.
Accordingly, an object of the present invention is to provide a pressure-sensitive adhesive sheet which, even though thin, satisfies processability and irregularity-followability.
Further, another object of the present invention is to provide a pressure-sensitive adhesive sheet which, even though thin, satisfies processability and irregularity-followability and is excellent in separator releasability.
As a result of assiduous investigations, the present inventors have found that a pressure-sensitive adhesive sheet including a substrate and a pressure-sensitive adhesive layer satisfies, even though the pressure-sensitive adhesive sheet is thin, both processability and handleability (handling property) and have further found that, when the thickness of the substrate is made smaller than a specific thickness, then the pressure-sensitive adhesive sheet can satisfy irregularity-followability.
Further, the present inventors have found that a double-sided pressure-sensitive adhesive sheet having an acrylic pressure-sensitive adhesive layer on both sides of the substrate satisfies, even though the pressure-sensitive adhesive sheet is thin, both processability and handleability (handling property) and that, when the thickness of the substrate is

made smaller than a specific thickness, then the pressure-sensitive adhesive sheet can satisfy irregularity-followability and that, in addition, when the difference between the peel force of the separator, on the heavy-peeling side, relative to the pressure-sensitive adhesive layer and the peel force of the separator, on the light-peeling side, relative to the pressure-sensitive adhesive layer is controlled to be a specific level or higher, then the pressure-sensitive adhesive sheet can readily realize good separator releasability.
Then, the present inventors have completed the present invention.

That is, the present invention provides the following pressure-sensitive adhesive sheet, electric or electronic device member laminate and optical member laminate.

<1> A pressure-sensitive adhesive sheet, comprising a plastic substrate having a thickness of more than 0 μm and less than 2.0 μm and a pressure-sensitive adhesive layer on at least one side of the plastic substrate, wherein:

the pressure-sensitive adhesive layer contains an acrylic polymer or a rubber-based polymer in an amount of 50 wt% or more relative to a total amount of the pressure-sensitive adhesive layer (100 wt%), and
the acrylic polymer is formed of a monomer mixture containing the following (m1) in an amount of from 50.0 to 99.8 wt% relative to a total amount of monomer components (100 wt%) and the following (m2) in an amount of from 0.01 to 20 wt% relative to the total amount of monomer components (100 wt%):

(m1): an alkyl (meth)acrylate monomer having an alkyl group with from 1 to 10 carbon atoms, which is represented by the following formula (1),

$$CH_2=C(R^1)COOR^2 \qquad (1)$$

wherein $R^1$ represents a hydrogen atom or a methyl group, and $R^2$ represents an alkyl group with from 1 to 10 carbon atoms;
(m2): a polar group-containing monomer.

<2> The pressure-sensitive adhesive sheet according to <1>, wherein:

the pressure-sensitive adhesive layer contains the acrylic polymer, and
the monomer mixture contains, as the (m1), an alkyl (meth)acrylate monomer having an alkyl group with from 1 to 5 carbon atoms and an alkyl (meth)acrylate monomer having an alkyl group with from 6 to 10 carbon atoms.

<3> The pressure-sensitive adhesive sheet according to <1> or <2>, wherein the (m2) is at least one monomer selected from the group consisting of a vinyl-based monomer having a nitrogen atom in a skeleton thereof, a vinyl-based monomer having a carboxyl group in a skeleton thereof, and a vinyl-based monomer having a hydroxyl group in a skeleton thereof.

<4> The pressure-sensitive adhesive sheet according to <3>, wherein the vinyl-based monomer having a hydroxyl group in a skeleton thereof is a hydroxyalkyl (meth)acrylate.

<5> The pressure-sensitive adhesive sheet according to any one of <1> to <4>. wherein the pressure-sensitive adhesive layer contains a crosslinking agent in an amount of from 0.001 to 10 parts by weight relative to 100 parts by weight of the acrylic polymer or the rubber-based polymer.

<6> The pressure-sensitive adhesive sheet according to any one of <1> to <5>, wherein the pressure-sensitive adhesive layer contains a tackifying resin in an amount of from 5 to 60 parts by weight relative to 100 parts by weight of the acrylic polymer or the rubber-based polymer.

<7> The pressure-sensitive adhesive sheet according to any one of <1> to <6>, having the pressure-sensitive adhesive layer on both sides of the plastic substrate.
<8> The pressure-sensitive adhesive sheet according to any one of <1> to <7>, comprising the plastic substrate having a thickness of more than 0 μm and less than 2.0 μm, an acrylic pressure-sensitive adhesive layer A on one side of the plastic substrate and an acrylic pressure-sensitive adhesive layer B on the other side of the plastic substrate, wherein:

a separator A is provided so as to be in contact with the acrylic pressure-sensitive adhesive layer A and a separator B is provided so as to be in contact with the acrylic pressure-sensitive adhesive layer B,
the separator A has a release layer formed of a silicone-based release agent,
the separator B has a release layer formed of a silicone-based release agent, and
a difference between a peel force of the separator B relative to the acrylic pressure-sensitive adhesive layer B and a peel force of the separator A relative to the acrylic pressure-sensitive adhesive layer A is 0.01 N/50 mm or more and 0.50 N/50 mm or less.

<9> A pressure-sensitive adhesive sheet, comprising a plastic substrate having a thickness of more than 0 μm and less than 2.0 μm, an acrylic pressure-sensitive adhesive layer A on one side of the plastic substrate and an acrylic pressure-sensitive adhesive layer B on the other side of the plastic substrate, wherein:

a separator A is provided so as to be in contact with the acrylic pressure-sensitive adhesive layer A and a separator B is provided so as to be in contact with the acrylic pressure-sensitive adhesive layer B,
the separator A has a release layer formed of a silicone-based release agent,
the separator B has a release layer formed of a silicone-based release agent, and
a difference between a peel force of the separator B relative to the acrylic pressure-sensitive adhesive layer B and a peel force of the separator A relative to the acrylic pressure-sensitive adhesive layer A is 0.01 N/50 mm or more and 0.50 N/50 mm or less.

<10> The pressure-sensitive adhesive sheet according to any one of <1> to <9>, which is for an electric or electronic device.

<11> The pressure-sensitive adhesive sheet according to any one of <1> to <9>, which is for an optical member.

<12> An electric or electronic device member laminate, having a laminate configuration of the pressure-sensitive adhesive sheet according to any one of <1> to <9> and an electric or electronic device member.

<13> An optical member laminate, having a laminate configuration of the pressure-sensitive adhesive sheet according to any one of <1> to <9> and an optical member.

Since the pressure-sensitive adhesive sheet of the present invention has the above-mentioned configuration, even though the pressure-sensitive adhesive sheet is thin, the pressure-sensitive adhesive sheet satisfies processability and irregularity-followability,
Further, even though the pressure-sensitive adhesive sheet of the present invention is thin, the pressure-sensitive adhesive sheet satisfies processability and irregularity-followability and is excellent in separator releasability.

DETAILED DESCRIPTION OF THE INVENTION

The pressure-sensitive adhesive sheet of the present invention includes a plastic substrate having a thickness of more than 0 μm and less than 2.0 μm and a pressure-sensitive adhesive layer on at least one side of the plastic substrate. In this description, the "plastic substrate having a thickness of more than 0 μm and less than 2.0 μm" may be referred to as the "substrate in the present invention".

The pressure-sensitive adhesive sheet of the present invention may be a pressure-sensitive adhesive sheet having a pressure-sensitive adhesive layer on one side of the substrate in the present invention (single-sided pressure-sensitive adhesive sheet), or may be a pressure-sensitive adhesive sheet having a pressure-sensitive adhesive layer on both sides of the substrate in the present invention (double-sided pressure-sensitive adhesive sheet). Above all, the pressure-sensitive adhesive sheet of the present invention is preferably a double-sided pressure-sensitive adhesive sheet from the viewpoint of using it for laminating two members to each other or using it for fixation or temporary fixation of members.

In the pressure-sensitive adhesive sheet of the present invention, the pressure-sensitive adhesive surface (the surface of the pressure-sensitive adhesive layer) may be protected with a separator (release liner) or the substrate in the present invention until it is used. For example, in the case where the pressure-sensitive adhesive sheet of the present invention is a single-sided pressure-sensitive adhesive sheet, the pressure-sensitive adhesive surface thereof may be protected with a separator, or may be protected with the back surface (the surface opposite to the side of the substrate on which the pressure-sensitive adhesive layer is provided) of the substrate thereof through winding. On the other hand, in the case where the pressure-sensitive adhesive sheet of the present invention is a double-sided pressure-sensitive adhesive sheet, one pressure-sensitive adhesive surface thereof may be protected with a separator and the other pressure-sensitive adhesive surface thereof may be protected with another separator; or by winding, one pressure-sensitive adhesive surface may be protected with one surface of a separator and the other pressure-sensitive adhesive surface or may be protected with the other surface of the separator. In other words, in the case where the pressure-sensitive adhesive sheet of the present invention is a double-sided pressure-sensitive adhesive sheet, it may be a double-separator-type one where the two pressure-sensitive adhesive surfaces are protected with two separators, or may be a single-separator-type one where the two pressure-sensitive adhesive surfaces are protected by one separator.

In the case where the pressure-sensitive adhesive sheet of the present invention is a double-sided pressure-sensitive adhesive sheet of which the pressure-sensitive adhesive surfaces are protected with separator(s), examples of such an embodiment include a pressure-sensitive adhesive sheet, including the substrate in the present invention, an acrylic pressure-sensitive adhesive layer A on one side of the substrate in the present invention and an acrylic pressure-sensitive adhesive layer B on the other side of the substrate in the present invention, wherein: a separator A is provided so as to be in contact with the acrylic pressure-sensitive adhesive layer A and a separator B is provided so as to be in contact with the acrylic pressure-sensitive adhesive layer B; the separator A has a release layer formed of a silicone-based release agent; the separator B has a release layer formed of a silicone-based release agent; and a difference between a peel force of the separator B relative to the acrylic pressure-sensitive adhesive layer B and a peel force of the separator A relative to the acrylic pressure-sensitive adhesive layer A is 0.01 N/50 mm or more. This pressure-sensitive adhesive sheet is a double-separator-type double-sided pressure-sensitive adhesive sheet, in which the pressure-sensitive adhesive surface provided by the acrylic pressure-sensitive adhesive layer A is protected with the separator A and the pressure-sensitive adhesive surface provided by the acrylic pressure-sensitive adhesive layer B is protected with the separator B.

Preferably, the pressure-sensitive adhesive sheet of the present invention includes at least one pressure-sensitive adhesive layer that contains an acrylic polymer or a rubber-based polymer in an amount of 50 wt% or more relative to the total amount of the pressure-sensitive adhesive layer (100 wt%), wherein the acrylic polymer is formed of a monomer mixture containing the following (m1) in an amount of from 50.0 to 99.8 wt% relative to the total amount of the monomer components (100 wt%) and the following (m2) in an amount of from 0.01 to 20 wt% relative to the total amount of the monomer components (100 wt%). The monomer mixture means a mixture consisting of monomer components.

(m1): an alkyl (meth)acrylate monomer having an alkyl group with from 1 to 10 carbon atoms, which is represented by the following formula (1):

$$CH_2=C(R^1)COOR^2 \qquad (1)$$

(in the formula (1), $R^1$ represents a hydrogen atom or a methyl group, $R^2$ represents an alkyl group with from 1 to 10 carbon atoms),

(m2): a polar group-containing monomer.

The "(meth)acryl" means acryl and/or methacryl, and means one or both of acryl and methacryl.

The "pressure-sensitive adhesive sheet" includes a meaning of a "pressure-sensitive adhesive tape". In other words, the pressure-sensitive adhesive sheet of the present invention may also be a pressure-sensitive adhesive tape having a tape shape.

[Substrate in the present invention]

The substrate in the present invention is a plastic substrate (resin substrate or polymer substrate) having a thickness of more than 0 μm and less than 2.0 μm. The substrate in the present invention is a substrate composed of at least one layer, and may have a laminate structure of two or more layers. The substrate in the present invention is a part which, when the pressure-sensitive adhesive sheet of the present invention is used for (laminated to) an adherend, is laminated to the adherend along with the pressure-sensitive adhesive layer.

Not specifically defined, examples of a material to constitute the substrate in the present invention includes: polyesters such as polyethylene terephthalate, polyethylene naphthalate, polybutylene terephthalate and polybutylene naphthalate; polyolefins such as polyethylene, polypropylene and ethylene-propylene copolymer; polyvinyl alcohol, polyvinylidene chloride; polyvinyl chloride; vinyl chloride-vinyl acetate copolymer; polyvinyl acetate; polyamides; polyimides; celluloses; fluorine-based resins; polyethers; polyetheramides; polyether ether ketones; polyphenylene sulfides; polystyrenic resins such as polystyrene; polycarbonates; polyether sulfones, etc. Above all, polyethylene terephthalate (PET) is preferable from the viewpoint of good balance between the strength, the processability (handleability), the cost, the dimensional stability and the anchorability thereof. The material may be used alone or in combination of two or more thereof.

The thickness of the substrate in the present invention is not specifically defined so far as it is more than 0 μm and less than 2.0 μm. The thickness of the substrate in the present invention is less than 2.0 μm, and is preferably 1.5 μm or less, more preferably 1.0 μm or less, even more preferably 0.8 μm or less, still more preferably 0.5 μm or less, from the viewpoint that the pressure-sensitive adhesive sheet of the present invention can secure processability (especially, punching processability) and handleability and also irregularity-followability even though it is thin and from the viewpoint that the heat resistance can be secured. Regarding the lower limit thereof, the thickness of the substrate in the present invention may be more than 0 μm, preferably 0.01 μm or more, more preferably 0.1 μm or more, even more preferably 0.5 μm or more.

Through stretching treatment (monoaxial stretching or biaxial stretching) or the like, the deformation performance of the substrate in the present invention may be controlled. If desired, the surface of the substrate in the present invention may undergo some conventional surface treatment such as oxidation treatment according to a chemical or physical method, for example, chromate treatment, ozone exposure treatment, flame exposure treatment, high-voltage electric shock treatment, ionizing radiation treatment or the like, for the purpose of increasing the adhesiveness between the substrate and the pressure-sensitive adhesive layer. Further, in the case where the pressure-sensitive adhesive surface may be protected by the back surface of the substrate in the present invention, the back surface may undergo release treatment.

[Pressure-sensitive adhesive layer]

The pressure-sensitive adhesive sheet of the present invention includes a pressure-sensitive adhesive layer. Not specifically defined, the pressure-sensitive adhesive layer is preferably an acrylic pressure-sensitive adhesive layer or a rubber-based pressure-sensitive adhesive layer. The acrylic pressure-sensitive adhesive layer contains, as the base polymer therein, an acrylic polymer in an amount of 50 wt% or more relative to the total amount of the pressure-sensitive adhesive layer (100 wt%). The rubber-based pressure-sensitive adhesive layer contains, as the base polymer therein, a rubber-based polymer in an amount of 50 wt% or more relative to the total amount of the pressure-sensitive adhesive layer (100 wt%).

The pressure-sensitive adhesive layer is formed of a pressure-sensitive adhesive composition. The pressure-sensitive adhesive composition means a composition to form a pressure-sensitive adhesive layer. In this description, the pressure-sensitive adhesive composition to form the acrylic pressure-sensitive adhesive layer may be referred to as "acrylic pressure-sensitive adhesive composition", and the pressure-sensitive adhesive composition to form the rubber-based pressure-sensitive adhesive layer may be referred to as "rubber-based pressure-sensitive adhesive composition".

The pressure-sensitive adhesive composition may have any form, and examples thereof include an emulsion-type composition, a solvent-type (solution-type) composition, an active energy ray curable composition, a thermal melting (hot-melt) composition, etc. Above all, the composition is preferably a solvent-type one from the viewpoint of the productivity thereof.

As the solvent-type pressure-sensitive adhesive composition, preferable examples thereof include a pressure-sensitive adhesive composition containing, as the indispensable component therein, a base polymer (rubber-based

polymer or acrylic polymer). As the active energy ray-curable pressure-sensitive adhesive composition, preferable examples thereof include a pressure-sensitive adhesive composition containing, as the indispensable component therein, a mixture of monomer (monomer mixture) components constituting the base polymer (rubber-based polymer or acrylic polymer) or a partially-polymerized product thereof. The "partially-polymerized product" means a composition in which one or more components of the monomer components contained in the monomer mixture have been partially polymerized. The "monomer mixture" includes a case that contains only one type of a monomer component.

(Rubber-based pressure-sensitive adhesive layer)

As described above, the pressure-sensitive adhesive sheet of the present invention preferably has a rubber-based pressure-sensitive adhesive layer. The rubber-based pressure-sensitive adhesive layer contains a rubber-based polymer as the base polymer therein. The proportion of the rubber-based polymer in the rubber-based pressure-sensitive adhesive layer is not specifically defined so far as it is 50 wt% or more, but from the viewpoint of the adhesiveness reliability, the proportion is preferably 60 wt% or more, more preferably 70 wt% or more.

Examples of the rubber-based polymer include natural rubber, polybutadiene, polyisoprene, polyisobutylene, butyl rubber, chloroprene rubber, silicone rubber, acrylonitrile-butadiene rubber, ethylene-propylene terpolymer, etc. The rubber-based polymer may be used alone or in combination of two or more thereof.

As the rubber-based polymer, preferable examples thereof include a styrene-based block copolymer. The styrene-based block copolymer means a polymer having at least one styrene block. The styrene block indicates a segment including styrene as the main monomer therein. A segment consisting essentially of styrene alone is a typical example of the styrene block as referred to herein.

As the styrene-based block copolymer, examples thereof include a styrene-isoprene block copolymer, a styrene-butadiene block copolymer, etc. The styrene-isoprene block copolymer is meant to indicate a polymer having at least one styrene block and at least one isoprene block (segment including isoprene as the main monomer therein). As the styrene-isoprene block copolymer, examples thereof include a triblock-structured copolymer having a styrene block (hard segment) on both ends of an isoprene block (soft segment) (triblock form, styrene-isoprene-styrene block copolymer (SIS block copolymer)); a diblock-structured copolymer including one isoprene block and one styrene block (diblock form, for example, styrene-isoprene rubber, etc.), etc. As the styrene-butadiene block copolymer, examples thereof include a polymer having at least one styrene block and at least one butadiene block (segment including butadiene as the main monomer therein) (for example, styrene-butadiene rubber, etc.), etc. As the styrene-based block copolymer, examples thereof also include a styrene-butadiene-styrene block copolymer (SBS block copolymer), a styrene-ethylene/butylene-styrene block copolymer (SEBS block copolymer), etc.

In addition, as the rubber-based polymer, preferable examples thereof include a block copolymer of a monovinyl-substituted aromatic compound and a conjugated diene compound. The "block copolymer of a monovinyl-substituted aromatic compound and a conjugated diene compound" is meant to indicate a polymer having at least one segment including a monovinyl-substituted aromatic compound as the main monomer therein (this means a copolymerization component accounting for more than 50 wt%) (hereinafter this segment may be referred to as "segment A") and at least one segment including a conjugated diene compound as the main monomer therein (hereinafter this may be referred to as "segment B"). In general, the glass transition temperature of the segment A is higher than the glass transition temperature of the segment B. As typical structures of the "block copolymer of the monovinyl-substituted aromatic compound and the conjugated diene compound", examples thereof include a triblock-structured copolymer having the segment A (hard segment) on both ends of the segment B (soft segment) (A-B-A structured triblock form), a diblock-structured copolymer including one segment A and one segment B (A-B structured diblock form), etc.

The monovinyl-substituted aromatic compound indicates a compound in which a vinyl group-containing functional group bonds to an aromatic ring. As the aromatic ring, examples thereof include a benzene ring. The benzene ring may be substituted with a functional group not having a vinyl group (for example, an alkyl group, etc.). Examples of the monovinyl-substituted aromatic compound include styrene, $\alpha$-methylstyrene, vinyltoluene, vinylxylene, etc. Specific examples of the conjugated diene compound include 1,3-butadiene, isoprene, etc.

Above all, as the rubber-based polymer, preferable examples thereof include the above-mentioned styrene-based block copolymer or the above-mentioned block copolymer of the monovinyl-substituted aromatic compound and the conjugated diene compound, from the standpoint of attaining the resistance to repulsion force and attaining retention power.

In the styrene-based block copolymer or the block copolymer of the monovinyl-substituted aromatic compound and the conjugated diene compound, the styrene content is not specifically defined but is preferably from 10 to 35 wt%, more preferably from 15 to 24 wt%, even more preferably from 16 to 23 wt% from the viewpoint of attaining resistance to repulsive force and attaining retention power.

The styrene content means the mass ratio (weight ratio) of the styrene component to the total mass (total weight) of the styrene-based block copolymer or the "block copolymer of a monovinyl-substituted aromatic compound

and a conjugated diene compound". The styrene content may be measured through NMR (nuclear magnetic resonance spectrometry).

The styrene-based block copolymer and the "block copolymer of a monovinyl-substituted aromatic compound and a conjugated diene compound" may be in any form of a diblock form, a triblock form, a radial form, or a mixture of these, etc. However, from the viewpoint of attaining resistance to repulsive force and attaining retention power, the copolymer preferably contains a diblock form. In the styrene-based block copolymer and the "block copolymer of a monovinyl-substituted aromatic compound and a conjugated diene compound", the proportion of the diblock form is not specifically defined, but is preferably from 30 to 80 wt%, more preferably from 40 to 80 wt%, even more preferably from 50 to 80 wt%, still more preferably from 50 to 70 wt%.

The proportion of the diblock form means the mass ratio (weight ratio) of the diblock form to the total mass (total weight) of the styrene-based block copolymer or the "block copolymer of a monovinyl-substituted aromatic compound and a conjugated diene compound". The proportion of the diblock form may be determined by comparing the peak areas in high-performance liquid chromatography. For example, a total amount of the copolymer to be analyzed is dissolved in tetrahydrofuran (THF), liquid chromatography columns (GS5000H and G4000H, manufactured by Tosoh Corporation) are connected in series in two stages each and in four stages in total, THF is used as the mobile phase, and then, the sample is analyzed through high-performance liquid chromatography at a temperature of 40°C and at a flow rate of 1 ml/min. From the resulting chart, the area of the peak corresponding to the diblock form and the area of all peaks are obtained, and the percentage of the peak area for the diblock form to the area of all peaks is calculated,

(Acrylic pressure-sensitive adhesive layer)

As described above, the pressure-sensitive adhesive sheet of the present invention preferably has an acrylic pressure-sensitive adhesive layer as the pressure-sensitive adhesive layer therein. The acrylic pressure-sensitive adhesive layer contains an acrylic polymer as the base polymer therein. Not specifically defined, the proportion of the acrylic polymer in the acrylic pressure-sensitive adhesive layer is 50 wt% or more, and is preferably 60 wt% or more and more preferably 70 wt% or more, from the viewpoint of the adhesiveness reliability.

The acrylic polymer is not specifically defined, and for example, the acrylic polymer may be any acrylic polymer usable in acrylic pressure-sensitive adhesives. Preferable examples thereof include an acrylic polymer formed of a monomer mixture that contains (m1) in an amount of from 50.0 to 99.8 wt% relative to the total amount of the monomer components (100 wt%) and contains (m2) in an amount of from 0.01 to 20 wt% relative to the total amount of the monomer components (100 wt%). In this description, the "acrylic polymer formed of a monomer mixture that contains (m1) in an amount of from 50.0 to 99.8 wt% relative to the total amount of the monomer components (100 wt%) and contains (m2) in an amount of from 0.01 to 20 wt% relative to the total amount of the monomer components (100 wt%)" may be referred to as "acrylic polymer A".

The acrylic polymer A contains at least the (m1) and the (m2) as the monomer components constituting the polymer.

The (m1) is an alkyl (meth)acrylate monomer having an alkyl group with from 1 to 10 carbon atoms. The alkyl group having from 1 to 10 carbon atoms is preferably a linear or branched alkyl group. The (m1) may be used alone or in combination of two or more thereof.

As the (m1), preferable examples include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, dodecyl (meth)acrylate, etc.

The proportion of the (m1) to the total amount of the monomer components (100 wt%) in the monomer mixture to form the acrylic polymer A is from 50.0 to 99.8 wt%, preferably from 60.0 to 99.8 wt%, more preferably from 70.0 to 99.8 wt%, even more preferably from 80.0 to 99.8 wt%, still more preferably from 90.0 to 99.8 wt%, form the viewpoint of attaining durability and adhesiveness reliability. In other words, the proportion of the (m1) to the total amount of the monomer components (100 wt%) to constitute the acrylic polymer is from 50.0 to 99.8 wt%, preferably from 60.0 to 99.8 wt%, more preferably from 70.0 to 99.8 wt%, even more preferably from 80.0 to 99.9 wt%, still more preferably from 90.0 to 99.8 wt%.

Above all, the (m1) is preferably an alkyl (meth)acrylate having an alkyl group with from 1 to 5 carbon atoms and an alkyl (meth)acrylate having an alkyl group with from 6 to 10 carbon atoms, from the viewpoint that the acrylic pressure-sensitive adhesive layer can sufficiently secure tackiness and adhesiveness reliability even though it is thin. In other words, the (m1) is preferably a combination of the alkyl (meth)acrylate having an alkyl group with from 1 to 5 carbon atoms and the alkyl (meth)acrylate having an alkyl group with from 6 to 10 carbon atoms.

Specifically, it is desirable that the acrylic pressure-sensitive adhesive layer contains the above-mentioned acrylic polymer A and that the monomer mixture to form the acrylic polymer A contains, as the (m1), an alkyl (meth)acrylate having an alkyl group with from 1 to 5 carbon atoms and an alkyl (meth)acrylate having an alkyl group with from 6 to 10 carbon atoms.

In particular, the (m1) is preferably n-butyl acrylate and 2-ethylhexyl acrylate. In other words, the monomer mixture to form the acrylic polymer preferably contains, as the (m1), both n-butyl acrylate and 2-ethylhexyl acrylate.

In the case where the (m1) is an alkyl (meth)acrylate having an alkyl group with from 1 to 5 carbon atoms and an alkyl (meth)acrylate having an alkyl group with from 6 to 10 carbon atoms, as described above, the proportion of the alkyl (meth)acrylate having an alkyl group with from 1 to 5 carbon atoms and the alkyl (meth)acrylate having an alkyl group with from 6 to 10 carbon atoms is preferably, as former/latter (by weight), from 90/10 to 10/90, more preferably from 80/20 to 20/80.

The monomer mixture to form the acrylic polymer A contains at least the (m2). In other words, the acrylic polymer A contains, as the monomer component to constitute the acrylic polymer A, at least the (m2) capable of copolymerizing with the (m1). The (m2) may be used alone or in combination of two or more thereof.

The (m2) is a polar group-containing monomer, namely a monomer having a polar group and a carbon-carbon double bond (ethylenically unsaturated bond) in the skeleton thereof, that is, in the monomer structure. The (m2) is a polar group-containing vinyl-based monomer. The acrylic polymer A contains (m2) as the monomer component to constitute the acrylic polymer A, and therefore suitable cohesion force can be easily secured. Accordingly, even though it is thin, the acrylic pressure-sensitive adhesive layer can readily secure adhesiveness reliability, processability and step absorbability.

The (m2) is not specifically defined, and preferable examples thereof include a vinyl-based monomer having a nitrogen atom in the skeleton thereof, a vinyl-based monomer having a carboxyl group in the skeleton, and a vinyl-based monomer having a hydroxyl group in the skeleton. In this description, "vinyl-based monomer having a nitrogen atom in the skeleton" may be referred to as "nitrogen atom-containing monomer"; "vinyl-based monomer having a carboxyl group in the skeleton" may be referred to as "carboxyl group-containing monomer"; and "vinyl-based monomer having a hydroxyl group in the skeleton" may be referred to as "hydroxyl group-containing monomer". However, the hydroxyl group-containing monomer does not include the nitrogen atom-containing monomer. In other words, in this description, the monomer having a hydroxyl group and a nitrogen atom in the skeleton thereof shall be in the category of the nitrogen atom-containing monomer.

Specifically, it is desirable that the (m2) is at least one monomer selected from the group consisting of the nitrogen atom-containing monomer, the carboxyl group-containing monomer and the hydroxyl group-containing monomer.

As the nitrogen atom-containing group, preferable examples thereof include N-vinyl cyclic amides, (meth) acrylamides, etc. The nitrogen atom-containing monomer may be used alone or in combination of two or more thereof.

As the N-vinyl cyclic amide, examples thereof include an N-vinyl cyclic amide represented by the following formula (2).

[Chem. 2]

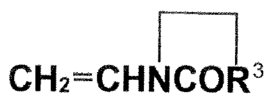

(2)

(In the formula (2), $R^3$ represents a divalent organic group)

In the formula (2), $R^3$ is a divalent organic group, preferably a divalent saturated hydrocarbon group or a divalent unsaturated hydrocarbon group, and more preferably a divalent saturated hydrocarbon group (for example, an alkylene group having 3 to 5 carbon atoms and the like).

Examples of the N-vinyl cyclic amide represented by the formula (2) include N-vinyl-2-pyrrolidone, N-vinyl-2-piperidone, N-vinyl-3-morpholinone, N-vinyl-2-caprolactam, N-vinyl-1,3-oxazine-2-one, N-vinyl-3,5-morpholine dione, and the like.

Examples of the (meth)acrylamides include (meth)acrylamide, N-alkyl (meth)acrylamide, N,N-dialkyl (meth) acrylamide and the like. Examples of the N-alkyl (meth)acrylamide include N-ethyl (meth)acrylamide, N-isopropyl (meth) acrylamide, N-n-butyl (meth)acrylamide, N-octyl acrylamide and the like. Examples of the N-alkyl (meth)acrylamide include (meth)acrylamide having an amino group, such as dimethylaminoethyl (meth)acrylamide, diethylaminoethyl (meth)acrylamide and dimethylaminopropyl (meth)acrylamide. Examples of the N,N-dialkyl (meth)acrylamide include N, N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, N,N-di(t-butyl) (meth)acrylamide and the like.

Examples of the (meth)acrylamides also includes various N-hydroxyalkyl (meth)acrylamides. Examples of the

N-hydroxyalkyl (meth)acrylamides include N-methylol (meth)acrylamide, N-(2-hydroxyethyl) (meth)acrylamide, N-(2-hydroxypropyl) (meth)acrylamide, N-(1-hydroxypropyl) (meth)acrylamide, N-(3-hydroxypropyl) (meth)acrylamide, N-(2-hydroxybutyl) (meth)acrylamide, N-(3-hydroxybutyl) (meth)acrylamide, N-(4-hydroxybutyl) (meth)acrylamide, N-methyl-N-2-hydroxyethyl (meth)acrylamide and the like.

Examples of the (meth)acrylamides also includes various N-alkoxyalkyl(meth)acrylamides. Examples of the N-alkoxyalkyl (meth)acrylamide include N-methoxymethyl (meth)acrylamide, N-butoxymethyl (meth)acrylamide and the like.

Examples of the nitrogen atom-containing monomer other than the N-vinyl cyclic amide and the (meth)acrylamides include an amino group-containing monomer such as aminoethyl (meth)acrylate, dimethylaminoethyl (meth) acrylate, dimethylaminopropyl (meth)acrylate and t-butylaminoethyl (meth)acrylate; a cyano group-containing monomer such as acrylonitrile and methacrylonitrile; a heterocyclic ring-containing monomer such as (meth)acryloyl morpholine, N-vinylpiperazine, N-vinylpyrrole, N-vinylimidazole, N-vinylpyrazine, N-vinylmorpholine, N-vinylpyrazole, vinylpyridine, vinylpyrimidine, vinyloxazole, vinylisoxazole, vinylthiazole, vinylisothiazole, vinylpyridazine, (meth)acryloyl pyrrolidone, (meth)acryloyl pyrrolidine, (meth)acryloyl piperidine and N-methylvinylpyrrolidone; an imide group-containing monomer, e.g. a maleimide-based monomer such as N-cyclohexylmaleimide, N-isopropylmaleimide, N-laurylmaleimide and N-phenylmaleimide, an itaconimide-based monomer such as N-methylitaconimide, N-ethylitaconimide, N-butylitaconimide, N-octylitaconimide, N-2-ethylhexylitaconimide, N-laurylitaconimide and N-cyclohexylitaconimide, a succinimide-based monomer such as N-(meth)acryloyloxymethylene succinimide, N-(meth)acryloyl-6-oxyhexamethylene succinimide and N-(meth)acryloyl-8-oxyoctamethylene succinimide; an isocyanate group-containing monomer such as 2-(meth)acryloyloxyethyl isocyanate; and the like.

Among them, as the nitrogen atom-containing monomer, N-vinyl cyclic amide represented by the formula (2) and (meth)acrylamides are preferable, and N-vinyl-2-pyrrolidone, N-vinyl-2-caprolactam, N,N-dimethyl (meth)acrylamide and N,N-diethyl (meth)acrylamide are more preferable, and N-vinyl-2-pyrrolidone is even more preferable.

Examples of the carboxyl group-containing monomer includes (meth)acrylic acid, itaconic acid, maleic acid, fumaric acid, crotonic acid, isocrotonic acid, etc. Examples thereof also include acid anhydride-containing monomers such as maleic anhydride. The carboxyl group-containing monomers may be used alone or in combination of two or more thereof.

Above all, as the carboxyl group-containing monomer, from the viewpoint of the adhesion force and the cohesion force thereof, (meth)acrylic acid is preferable, and acrylic acid is more preferable.

Examples of the hydroxyl group-containing monomer includes hydroxyalkyl (meth)acrylate, vinyl alcohol, allyl alcohol, etc. Examples of the hydroxyalkyl (meth)acrylate includes 2-hydroxyethyl (meth)acrylate, 3-hydroxypropyl (meth) acrylate, 4-hydroxybutyl (meth)acrylate, 6-hydroxyhexyl (meth)acrylate, hydroxyoctyl (meth)acrylate, hydroxydecyl (meth)acrylate, hydroxylauryl (meth)acrylate, (4-hydroxymethylcyclohexyl) (meth)acrylate, etc. The hydroxyl group-containing monomers may be used alone or in combination of two or more thereof.

Above all, as the hydroxyl group-containing monomer, from the viewpoint of the adhesion force and the cohesion force thereof, hydroxyalkyl (meth)acrylate is preferable, and 2-hydroxyethyl acrylate, 4-hydroxybutyl acrylate, 6-hydroxyhexyl acrylate are more preferable, and 2-hydroxyethyl acrylate, 4-hydroxybutyl acrylate are further preferable.

As polar group-containing monomers other than the above-mentioned nitrogen atom-containing monomer, carboxyl group-containing monomer and hydroxyl group-containing monomer, examples thereof include alkoxylalkyl (meth)acrylate, epoxy group-containing monomer, sulfonic acid group-containing monomer, phosphoric acid group-containing monomer, vinyl esters, vinyl ethers, vinyl chloride, etc. Examples of the alkoxylalkyl (meth)acrylate include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, 4-ethoxybutyl (meth)acrylate, etc. Examples of the epoxy group-containing monomer include glycidyl (meth)acrylate, methylglycidyl (meth)acrylate, etc. Examples of the sulfonic acid group-containing monomer include sodium vinylsulfonate, etc. Examples of the vinyl esters include vinyl acetate, vinyl propionate, etc. Examples of the vinyl ethers include vinyl alkyl ether, etc. The polar group-containing monomers may be used alone or in combination of two or more thereof.

In particular, the (m2) is preferably two or more monomers selected from the group consisting of the nitrogen atom-containing monomer, the carboxyl group-containing monomer and the hydroxyl group-containing monomer, from the viewpoint of the adhesion force and the cohesion force thereof. In other words, it is desirable that the (m2) is used here as a combination of the nitrogen-containing monomer and the carboxyl group-containing monomer, or a combination of the nitrogen atom-containing monomer and the hydroxyl group-containing monomer, or a combination of the carboxyl group-containing monomer and the hydroxyl group-containing monomer, or a combination of the nitrogen atom-containing monomer, the carboxyl group-containing monomer and the hydroxyl group-containing monomer. Especially preferably, the (m2) is used as a combination of the carboxyl group-containing monomer and the hydroxyl group-containing monomer.

In other words, it is desirable that the acrylic pressure-sensitive adhesive layer contains the above-mentioned acrylic polymer A and that the monomer mixture to form the acrylic polymer A contains, as the (m2), two or more monomers selected from the group consisting of the nitrogen atom-containing monomer, the carboxyl group-containing

monomer and the hydroxyl group-containing monomer (especially the carboxyl group-containing monomer and the hydroxyl group-containing monomer),

Further, the acrylic polymer A may contain, as the constituent monomer, that is, as the monomer component copolymerizable with the (m1) and the (m2), a polyfunctional monomer. Specifically, the monomer mixture to form the acrylic polymer may contain a polyfunctional monomer. The polyfunctional monomer may be used alone or in combination of two or more thereof.

The polyfunctional monomer is not specifically defined, and examples thereof include hexanediol di(meth) acrylate, (1,6-hexanediol di(meth)acrylate), butanediol di(meth)acrylate, (poly)ethylene glycol di(meth)acrylate, (poly) propylene glycol di(meth)acrylate, neopentyl glycol di(meth)acrylate, pentaerythritol di(meth)acrylate, pentaerythritol tri (meth)acrylate, dipentaerythritol hexa(meth)acrylate, trimethylolpropane tri(meth)acrylate, tetramethylolmethane tri (meth)acrylate, allyl (meth)acrylate, vinyl (meth)acrylate, divinylbenzene, epoxy acrylate, polyester acrylate, urethane acrylate, etc. Above all, as the polyfunctional monomer, 1,6-hexanediol diacrylate, dipentaerythritol hexa(meth)acrylate are preferable. The content of the polyfunctional monomer may be suitably selected within a range not detracting from the advantageous effects of the present invention.

Further, the acrylic polymer A may contain, as the constituent monomer component, that is, as the monomer component copolymerizable with the (m1) and the (m2), other monomer(s) such as those mentioned below. In other words, the monomer mixture to form the acrylic polymer A may contain other monomer(s) such as those mentioned below. Examples of the other monomer includes, for example, alicyclic hydrocarbon group-containing (meth)acrylates, aromatic hydrocarbon group-containing (meth)acrylates, alkyl (meth)acrylate monomers having an alkyl group with from 11 to 20 carbon atoms. Examples of the alicyclic hydrocarbon group-containing (meth)acrylates include, for example, cyclopentyl (meth)acrylate, cyclohexyl (meth)acrylate, isobornyl (meth)acrylate, etc. Examples of the aromatic hydrocarbon group-containing (meth)acrylates include, for example, phenyl (meth)acrylate, phenoxyethyl (meth)acrylate, benzyl (meth)acrylate, etc. Examples of the alkyl (meth)acrylate monomers having an alkyl group with from 11 to 20 carbon atoms include, for example, isodecyl (meth)acrylate, undecyl (meth)acrylate, dodecyl (meth)acrylate, tridecyl (meth) acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, etc.

The content of the other monomer is not specifically defined, and may be suitably defined within a range not having any negative influences on the characteristics of the pressure-sensitive adhesive sheet of the present invention. The other monomer(s) may be used alone or in combination of two or more thereof.

The acrylic polymer (A) is formed of the monomer mixture containing at least the (m1) and the (m2). The acrylic polymer A may be prepared through polymerization of the above-mentioned monomer components. Examples of the polymerization method include, for example, a solution polymerization method, an emulsion polymerization method, a bulk polymerization method, a polymerization with heat or through active energy ray irradiation (thermal polymerization method, active energy ray polymerization method), etc. Above all, a polymerization method through active energy ray irradiation (active energy ray polymerization method) and a solution polymerization method are preferred from the viewpoint of the balance of adhesiveness and the easiness in polymerization; and a solution polymerization method is more preferred.

Examples of the active energy ray for irradiation in the above-mentioned active energy ray polymerization (photopolymerization) include, for example, ionizing radiations such as $\alpha$ ray, $\beta$ ray, $\gamma$ ray, neutron ray and electron beam, and UV ray, etc. The UV ray is especially preferable. The irradiation energy, irradiation time and irradiation method of the active energy ray are not specifically defined so far as the photopolymerization initiator can be activated to thereby initiate the reaction of monomer components.

Various types of ordinary solvents may be used in the above-mentioned solution polymerization. The solvents may be organic solvents, e.g., esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone, etc. The solvent may be used alone or in combination of two or more thereof.

In polymerization, a polymerization initiator such as a photopolymerization initiator (photoinitiator) or a thermal polymerization initiator may be used depending on the type of the polymerization reaction. The polymerization initiator may be used alone or in combination of two or more thereof.

The photopolymerization initiator is not specifically defined, and examples thereof include, for example, benzoin ether-based photopolymerization initiators, acetophenone-based photopolymerization initiators, $\alpha$-ketol-based photopolymerization initiators, aromatic sulfonyl chloride-based photopolymerization initiators, optically-active oxime-based photopolymerization initiators, benzoin-based photopolymerization initiators, benzyl-based photopolymerization initiators, benzophenone-based photopolymerization initiators, ketal-based photopolymerization initiators, thioxanthone-based photopolymerization initiators, etc.

Examples of the benzoin ether-based photopolymerization initiators include, for example, benzoin methyl ether, benzoin ethyl ether, benzoin propyl ether, benzoin isopropyl ether, benzoin isobutyl ether, 2,2-dimethoxy-1,2-diphenylethan-1-one, anisole methyl ether, etc. Examples of the acetophenone-based photopolymerization initiators include, for example, 2,2-diethoxyacetophenone, 2,2-dimethoxy-2-phenylacetophenone, 1-hydroxycyclohexyl phenylketone, 4-phenoxydichloroacetophenone, 4-(t-butyl)dichloroacetophenone, etc. Examples of the α-ketol-based photopolymerization initiators include, for example, 2-methyl-2-hydroxypropiophenone, 1-[4-(2-hydroxyethyl)phenyl]-2-methylpropan-1-one, etc. Examples of the aromatic sulfonyl chloride-based photopolymerization initiators include, for example, 2-naphthalenesulfonyl chloride, etc. Examples of the optically-active oxime-based photopolymerization initiators include, for example, 1-phenyl-1,1-propanedione-2-(o-ethoxycarbonyl)-oxime, etc. Examples of the benzoin-based photopolymerization initiators include, for example, benzoin, etc. Examples of the benzyl-based photopolymerization initiators include, for example, benzyl, etc. Examples of the benzophenone-based photopolymerization initiators include, for example, benzophenone, benzoylbenzoic acid, 3,3'-dimethyl-4-methoxybenzophenone, polyvinylbenzophenone, α-hydroxycyclohexyl phenyl ketone, etc. Examples of the ketal-based photopolymerization initiators include, for example, benzyldimethyl ketal, etc. Examples of the thioxanthone-based photopolymerization initiators include, for example, thioxanthone, 2-chlorothioxanthone, 2-methylthioxanthone, 2,4-dimethylthioxanthone, isopropylthioxanthone, 2,4-diisopropylthioxanthone, docecylthioxanthone, etc.

Not specifically defined, the amount of the photopolymerization initiator to be used here is preferably from 0.01 to 1 part by weight, more preferably from 0.05 to 0.5 parts by weight relative to 100 parts by weight of the total amount of the monomer components contained in the acrylic monomer mixture to form the acrylic polymer A.

Examples of the polymerization initiator to be used in the above-mentioned solution polymerization include, for example, azo-based polymerization initiators, peroxide-based polymerization initiators (for example, dibenzoyl peroxide, tert-butyl permaleate, etc.), redox-based polymerization initiators, etc. Above all, the azo-based polymerization initiators disclosed in JP-A 2002-69411 are preferable. Examples of the azo-based polymerization initiators include 2,2'-azobisisobutyronitrile, 2,2'-azobis-2-methylbutyronitrile, dimethyl 2,2'-azobis(2-methylpropionate), 4,4'-azobis-4-cyanovalerianic acid, etc.

Not specifically defined, the amount of the azo-based polymerization initiator to be used here is preferably from 0.05 to 0.5 parts by weight, more preferably from 0.1 to 0.3 parts by weight relative to 100 parts by weight of the total amount of the monomer components contained in the acrylic monomer mixture to form the acrylic polymer A.

In the above, the acrylic polymer A is mainly described; however, any other acrylic polymer than the acrylic polymer A may also be produced in the same manner.

The pressure-sensitive adhesive layer that the pressure-sensitive adhesive sheet of the present invention has may contain an additive. The pressure-sensitive adhesive layer is formed of a pressure-sensitive adhesive composition (for example, acrylic pressure-sensitive adhesive composition or rubber-based pressure-sensitive adhesive composition); and the pressure-sensitive adhesive composition may contain an additive. In the pressure-sensitive adhesive layer, the additive may be in a form bonding to the acrylic polymer or the rubber-based polymer therein. For example, the crosslinking agent to be mentioned below may be contained in the pressure-sensitive adhesive layer in a form bonding to the acrylic polymer or the rubber-based polymer therein. The additive(s) may be used alone or in combination of two or more thereof.

As the additive, a crosslinking agent is preferably mentioned. The crosslinking agent can crosslink the base polymer (for example, the above-mentioned rubber-based polymer or the above-mentioned acrylic polymer) in the pressure-sensitive adhesive layer to thereby enhance the adhesiveness and the cohesion force of the layer. Examples of the crosslinking agent include, for example, isocyanate-based crosslinking agents, epoxy-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, carbodiimide-based crosslinking agents, oxazoline-based crosslinking agents, aziridine-based crosslinking agents, amine-based crosslinking agents, etc. Above all, isocyanate-based crosslinking agents, and epoxy-based crosslinking agents are preferable. The crosslinking agents may be used alone of in combination of two or more thereof.

As the isocyanate-based crosslinking agent (polyfunctional isocyanate compound), examples thereof include lower aliphatic polyisocyanates such as 1, 2-ethylene diisocyanate, 1.4-butylenediisocyanate and 1,6-hexamethylene diisocyanate; alicyclic polyisocyanates such as cyclopentylene diisocyanate, cyclohexylene diisocyanate, isophorone diisocyanate, hydrogenated tolylene diisocyanate and hydrogenated xylene diisocyanate; and aromatic polyisocyanates such as 2,4-tolylene diisocyanate, 2,6-tolylene diisocyanate, 4,4'-diphenylmethane diisocyanate and xylylene diisocyanate. The isocyanate-based crosslinking agent may be a trimethylolpropane/tolylene diisocyanate adduct (manufactured by Nippon Polyurethane Industry Co., Ltd., trade name "CORONATE L"), a trimethylolpropane/hexamethylene diisocyanate adduct (manufactured by Nippon Polyurethane Industry Co., Ltd., trade name "CORONATE HL"), or the like.

As the epoxy-based crosslinking agent (polyfunctional epoxy compound), examples thereof include N,N,N',N'-tetraglycidyl-m-xylenediamine, diglycidyl aniline, 1, 3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane

polyglycidyl ether, adipic acid diglycidyl ester, o-phthalic diglycidyl ester, triglycidyl-tris(2-hydroxyethyl)isocyanurate, resorcin diglycidyl ether, bisphenol-S-diglycidyl ether and an epoxy-based resin having two or more epoxy groups in the molecule. The epoxy-based crosslinking agent may be commercially available products such as trade name "TETRAD C" manufactured by Mitsubishi Gas Chemical Company, Inc.

Not specifically defined, the content of the crosslinking agent in the pressure-sensitive adhesive layer (for example, the above-mentioned rubber-based pressure-sensitive adhesive layer, the above-mentioned acrylic pressure-sensitive adhesive layer, etc.) that the pressure-sensitive adhesive sheet of the present invention has is preferably from 0.001 to 10 parts by weight, more preferably from 0.01 to 5 parts by weight, even more preferably from 0.01 to 3 parts by weight relative to 100 parts by weight of the acrylic polymer or the rubber-based polymer, from the viewpoint of the adhesiveness and the cohesion force of the layer.

As the additive, a tackifying resin (tackifier) is also preferably mentioned. The tackifying resin (tackifier) can enhance more the pressure-sensitive adhesive characteristics and the adhesiveness reliability of the pressure-sensitive adhesive layer. Examples of the tackifying resin include, for example, terpene-based tackifying resins, phenolic tackifying resins, rosin-based tackifying resins, petroleum-based tackifying resins, etc. The tackifying resins may be used alone or in combination of two or more thereof.

Examples of the terpene-based tackifying resins include, for example, terpene-based resins such as $\alpha$-pinene polymers, $\beta$-pinene polymers and dipentene polymers; modified terpene-based resins (for example, terpene-phenol resins, styrene-modified terpene resins, aromatic-modifed terpene resins, hydrogenated terpene resins, etc.) prepared by modifying those terpene resins (through phenolic modification, aromatic modification, hydrogenation modification, hydrocarbon modification or the like), etc.

Examples of the phenolic tackifying resins include, for example, condensates (for example, alkylphenol resins, xylene-formaldehyde resins, etc.) of various types of phenols (for example, phenol, m-cresol, 3,5-xylenol, p-alkylphenol, resorcinol, etc.) with formaldehyde; resoles prepared through addition reaction of those phenols with formaldehyde by the use of an alkali catalyst; novolaks prepared through condensation of those phenols with formaldehyde by the use of an acid catalyst; rosin-modified phenolic resins prepared through thermal polymerization of rosins (unmodified rosin, modified rosin, various rosin derivatives, etc.) with phenol by the use of an acid catalyst, etc.

Examples of the rosin-based tackifying resins include, for example, unmodified rosins (raw rosins) such as gum rosin, wood rosin and tall oil rosin; modified rosins (hydrogenated rosins, disproportionated rosins, polymerized rosins, and other chemically-modified rosins, etc.) prepared by modifying those unmodified rosins through hydrogenation, disproportionation, polymerization or the like; various rosin derivatives, etc. As those rosin derivatives, examples thereof include rosin esters such as ester compounds of rosins prepared through esterification of unmodified rosins with alcohols, and ester compounds of modified rosins prepared through esterification of modified rosins such as hydrogenated rosins, disproportionated rosins or polymerized rosins with alcohols; unsaturated aliphatic acid-modified rosins prepared by modifying those unmodified rosins or modified rosins (hydrogenated rosins, disproportionated rosins, polymerized rosins, etc.) with unsaturated aliphatic acids; unsaturated fatty acid-modified rosin esters prepared by modifying those rosin esters with unsaturated fatty acids; rosin alcohols prepared by reducing the carboxyl group in those unmodified rosins, modified rosins (hydrogenated rosins, disproportionated rosins, polymerized rosins, etc.), unsaturated fatty acid-modified rosins or unsaturated fatty acid-modified rosin esters; metal salts of rosins such as those unmodified rosins, modified rosins and various rosin derivatives (especially rosin esters), etc.

Examples of the petroleum-based tackifying resins include, for example, aromatic petroleum resins, aliphatic petroleum resins, alicyclic petroleum resins (aliphatic cyclic petroleum resins), aliphatic/aromatic petroleum resins, aliphatic/alicyclic petroleum resins, hydrogenated petroleum resins, coumarone resins, coumaroneindene resins, etc. Concretely, examples of the aromatic petroleum resins include, for example, polymers using only one or two or more types of vinyl group-containing aromatic hydrocarbons each having from 8 to 10 carbon atoms (styrene, o-vinyltoluene, m-vinyltoluene, p-vinyltoluene, $\alpha$-methylstyrene, $\beta$-methylstyrene, indene, methylindene, etc.), etc. As the aromatic petroleum resins, preferable examples thereof include aromatic petroleum resins (so-called "C9 petroleum resins") to be obtained from fractions (so-called "C9 petroleum fractions") such as vinyltoluene or indene. Examples of the aliphatic petroleum resins include, for example, polymers using only one or two or more types of olefins or dienes each having 4 or 5 carbon atoms [olefins such as butene-1, isobutylene and pentene-1; dienes such as butadiene, piperylene (1,3-pentadiene) and isoprene], etc. As the aliphatic petroleum resins, preferable examples thereof include aliphatic petroleum resins (so-called "C4 petroleum resins", "C5 petroleum resins", etc.) to be obtained from fractions (so-called "C4 petroleum fractions", "C5 petroleum fractions", etc.) such as butadiene, piperylene or isoprene. Examples of the alicyclic petroleum resins include, for example, alicyclic hydrocarbon resins to be obtained through cyclizing dimerization of aliphatic petroleum resins (so-called "C4 petroleum resins", "C5 petroleum resins", etc.), followed by polymerization of them; polymers of cyclic diene compounds (cyclopentadiene, dicyclopentadiene, ethylidenenorbornene, dipentene, ethylidenebicycloheptene, vinylcycloheptene, tetrahydroindene, vinylcyclohexene, limonene, etc.) and their hydrogenated derivatives; alicyclic hydrocarbon resins to be obtained through hydrogenation of the aromatic ring in the above-mentioned aromatic hydrocarbon resins or the following aliphatic/aromatic petroleum resins. Examples of the aliphatic/aromatic

petroleum resins include styrene-olefin copolymers, etc. Further, examples of the aliphatic/aromatic petroleum resins include so-called "C5/C9 copolymer-based petroleum resins", etc.

Further, as the tackifying resins, commercial products of trade name "SUMILIGHT RESIN PR-12603" manufactured by Sumitomo Bakelite Co., Ltd., trade name "PENSEL D125" manufactured by Arakawa Chemical Industry, Ltd., etc are also mentioned.

Above all, rosin-based tackifying resins are preferred as the tackifying resins; rosin esters are more preferred; and polymerized rosin esters (esterified products of rosins, esterified products of modified rosins) are even more preferred.

Not specifically defined, the content of the tackifying resin in the pressure-sensitive adhesive layer (for example, the above-mentioned rubber-based pressure-sensitive adhesive layer, the above-mentioned acrylic pressure-sensitive adhesive layer, etc.) that the pressure-sensitive adhesive sheet of the present invention has is preferably from 5 to 60 parts by weight, more preferably from 10 to 50 parts by weight, even more preferably from 10 to 45 parts by weight, relative to 100 parts by weight of the acrylic polymer or rubber-based polymer, from the viewpoint of enhancing the pressure-sensitive adhesive characteristics and the adhesiveness reliability.

Furthermore, as the above-mentioned additive, a silane coupling agent is preferable. When the silane coupling agent is contained therein, it is preferred since the adhesiveness reliability thereof to glass (especially the adhesiveness reliability thereof to glass in high-temperature high-humidity environments) is enhanced.

Not specifically defined, examples of the silane coupling agent include, for example, $\gamma$-glycidoxypropyltrimethoxysilane, $\gamma$-glycidoxypropyltriethoxysilane, $\gamma$-aminopropyltrimethoxysilane, N-phenylaminopropyltrimethoxysilane, etc. Above all, $\gamma$-glycidoxypropyltrimethoxysilane is preferable. As commercial products thereof, trade name "KBM-403" (manufactured by Shin-Etsu Chemical Co., Ltd.) is mentioned. The silane coupling agent(s) may be used alone or in combination of two or more thereof.

The content of the silane coupling agent in the pressure-sensitive adhesive layer that the pressure-sensitive adhesive sheet of the present invention has may be suitably selected within a range not detracting from the advantageous effects of the present invention.

Further, examples of the additive include crosslinking promoter, antiaging agent, filler, colorant (pigment, dye, etc.), UV absorbent, antioxidant, chain transfer agent, plasticizer, softener, surfactant, antistatic agent, etc. These additives may be contained within a range not detracting from the advantageous effects of the present invention.

The pressure-sensitive adhesive layer (for example, the above-mentioned rubber-based pressure-sensitive adhesive layer, the above-mentioned acrylic pressure-sensitive adhesive layer, etc.) may be formed of a pressure-sensitive adhesive composition (for example, a rubber-based pressure-sensitive adhesive composition, an acrylic pressure-sensitive adhesive composition, etc.). Not specifically defined, the pressure-sensitive adhesive composition may be produced, for example, according to any conventional production method. For example, a solvent-based pressure-sensitive adhesive composition may be produced by mixing a base polymer (the above-mentioned rubber-based polymer or the above-mentioned acrylic polymer), a solvent and optional additives (for example, the above-mentioned crosslinking agent, tackifying resin, etc.). For an active energy ray-curable pressure-sensitive adhesive composition, for example, an active energy ray-curable acrylic pressure-sensitive adhesive composition can be produced by mixing a monomer mixture or a partially polymerized product thereof and optional additives (for example, the above-mentioned crosslinking agent, tackifying resin, etc.).

Preferably, the pressure-sensitive adhesive composition has a viscosity suitable for handleability and coatability. For example, the active energy ray-curable acrylic pressure-sensitive adhesive composition preferably contains a partially polymerized product of a monomer mixture. Not specifically defined, the polymerization ratio of the partially polymerized product thereof is preferably from 5 to 20 wt%, more preferably from 5 to 15 wt%.

The polymerization ratio of the partially polymerized product thereof may be determined as follows.
A part of the partially polymerized product thereof to be analyzed is sampled to give a sample. The sample is accurately weighed to determine the weight thereof as "weight of partially polymerized product thereof before drying". Next, the sample is dried at 130°C for 2 hours, and the dried sample is accurately weight to determine the weight thereof as "weight of partially polymerized product thereof after drying". From the "weight of partially polymerized product thereof before drying" and the "weight of partially polymerized product thereof after drying", the weight of the sample having reduced by drying at 130°C for 2 hours is calculated to be "weight reduction" (weight of volatiles and unreacted monomers). From the thus-determined "weight of partially polymerized product thereof before drying" and "weight reduction", the polymerization ratio (wt%) of the partially polymerized product of the monomer components is calculated according to the following formula.

$$\text{Polymerization ratio (wt\%) of partially polymerized product of monomer components} = [1 - (\text{weight reduction})/(\text{weight of partially polymerized product thereof before drying})] \times 100$$

Not specifically defined, the pressure-sensitive adhesive layer may be formed, for example, by applying (coating) the above-mentioned pressure-sensitive adhesive composition onto a suitable support such as the substrate in the present invention, a release film or the like, and optionally followed by drying under heat and/or curing the coating layer. For example, in the case where the acrylic pressure-sensitive adhesive layer is formed of an active energy ray-curable acrylic pressure-sensitive adhesive composition, an active energy ray-curable acrylic pressure-sensitive adhesive composition is applied (coated) onto a support and irradiated with an active energy ray to form the intended layer. If desired, the coating layer may be dried under heat in addition to active energy ray irradiation thereto.

For the above-mentioned coating (applying), any coating method can be employed. For example, usable is any conventional coater, concretely, a gravure roll coater, a reverse roll coater, a kiss roll coater, a dip roll coater, a bar coater, a knife coater, a spray coater, a comma coater, a direct coater, etc.

When the pressure-sensitive adhesive layer is formed of the above-mentioned pressure-sensitive adhesive composition, a coating apparatus having a pressure-reducing means (for example, a vacuum box so planned that the inner gas could be sucked away through an exhaust duct connected to a suction fan) may be used. Using such a coating apparatus having the pressure-reducing means makes it possible to efficiently form a thin and uniform pressure-sensitive adhesive layer.

Using the above-mentioned coating apparatus, a roll of a uniform and thin pressure-sensitive adhesive sheet (tape) can be produced efficiently. For example, a double-sided pressure-sensitive adhesive tape having a total thickness of from 1 to 30 μm can be obtained efficiently. In the case where such a double-sided pressure-sensitive adhesive tape is produced, the tensile force of the substrate (substrate sheet) in the coating apparatus is preferably controlled to be from 1 to 15 N.

Not specifically defined, the gel fraction of the pressure-sensitive adhesive layer may be from 10 to 60 wt%, more preferably from 10 to 50 wt%, even more preferably from 10 to 40 wt%. When the gel fraction is 60 wt% or less, then the cohesion force of the pressure-sensitive adhesive layer could be kept small in some degree and therefore the pressure-sensitive adhesive layer could be soft; and consequently, the pressure-sensitive adhesive layer can readily follow a step part and can readily attain step absorbability. On the other hand, when the gel fraction is 10 wt% or more, then the pressure-sensitive adhesive layer may not be too soft and therefore may prevent a problem of processability degradation of the pressure-sensitive adhesive sheet. In addition, in such a range, bubbling or lift-off can be prevented in high-temperature environments or in high-temperature high-humidity environments, and therefore the adhesiveness reliability can be thereby enhanced. The gel fraction can be controlled, for example, by selecting and controlling the type and the content (amount to be used) of the polyfunctional monomer and/or the crosslinking agent.

The gel fraction (proportion of solvent-insoluble matter) may be determined as an insoluble matter in ethyl acetate. Concretely, the pressure-sensitive adhesive layer is immersed in ethyl acetate at room temperature (23 °C) for 7 days, and the weight fraction (unit: wt%) of the insoluble matter relative to the sample before immersion is determined to be the gel fraction. More concretely, the gel fraction is a value to be calculated according to the "Method of measuring gel fraction" to be mentioned below.

(Method of measuring gel fraction)

About 1 g of the pressure-sensitive adhesive layer to be analyzed is sampled, and its weight is measured. The weight is referred to as "weight of pressure-sensitive adhesive layer before immersion". Next, the sampled pressure-sensitive adhesive layer is immersed in 40 g of ethyl acetate for 7 days, and then all the components insoluble in ethyl acetate (insoluble matters) are collected. All the collected insoluble matters are dried at 130°C for 2 days to remove ethyl acetate, and then, the weight thereof is measured to be "dry weight of insoluble matter" (weight of pressure-sensitive adhesive layer after immersion). With that, the obtained numerical data are introduced into the following formula to calculate the gel fraction.

$$\text{Gel fraction (wt\%)} = [(\text{dry weight of insoluble matter})/(\text{weight of pressure-sensitive adhesive layer before immersion})] \times 100$$

Not specifically defined, the pressure-sensitive adhesive force (180° peel pressure-sensitive adhesive force, 180° peel adhesion strength) of the pressure-sensitive adhesive layer is preferably 0.1 N/20 mm or more. When the pressure-sensitive adhesive force is 0.1 N/20 mm or more, then the pressure-sensitive adhesive sheet is favorably used for temporary fixation or fixation. The pressure-sensitive adhesive force is measured at a peel angle of 180° and a tensile speed of 300 mm/min.

Not specifically defined, the thickness of the pressure-sensitive adhesive layer is preferably from 0.1 to 30 μm, more preferably from 0.1 to 10 μm, even more preferably from 0.25 to 3 μm.

In particular, the pressure-sensitive adhesive layer can have a pressure-sensitive adhesive force of 0.1 N/20 mm or more even though it has a thickness of from 0.25 to 3 μm and is thin.

[Other pressure-sensitive adhesive layer]

The pressure-sensitive adhesive sheet of the present invention may have other pressure-sensitive adhesive layer(s) (other pressure-sensitive adhesive layer than the above-mentioned pressure-sensitive adhesive layer (for example, the above-mentioned acrylic pressure-sensitive adhesive layer, the above-mentioned rubber-based pressure-sensitive adhesive layer, etc.)). The other pressure-sensitive adhesive layer is not specifically defined, and examples thereof include a pressure-sensitive adhesive layer formed of a conventional pressure-sensitive adhesive such as an urethane-based pressure-sensitive adhesive, an acrylic pressure-sensitive adhesive, a rubber-based pressure-sensitive adhesive, a silicone-based pressure-sensitive adhesive, a polyester-based pressure-sensitive adhesive, a polyamide-based pressure-sensitive adhesive, an epoxy-based pressure-sensitive adhesive, a vinyl alkyl ether-based pressure-sensitive adhesive, a fluorine-based pressure-sensitive adhesive, etc. The above-mentioned pressure-sensitive adhesive may be used alone or in combination of two or more thereof.

[Other layer]

The pressure-sensitive adhesive sheet of the present invention may have other layer(s) (for example, interlayer, undercoating layer, etc.) in addition to the substrate in the present invention, the above-mentioned pressure-sensitive adhesive layer (for example, the acrylic pressure-sensitive adhesive layer, the rubber-based pressure-sensitive adhesive layer, etc.) and the other pressure-sensitive adhesive layer, within a range not detracting from the advantageous effects of the present invention.

[Separator]

On the pressure-sensitive adhesive layer surface (pressure-sensitive adhesive surface) of the pressure-sensitive adhesive sheet of the present invention, a separator (release liner) may be provided until it is sued. In the case where the pressure-sensitive adhesive sheet of the present invention is a double-sided pressure-sensitive adhesive sheet, each pressure-sensitive adhesive surface may be protected by using individual separator, or may be protected in such a way that the surface is wound in a roll form by using one separator of which both sides are release surfaces. The separator is used as a protective material for the pressure-sensitive adhesive layer, and is peeled when the pressure-sensitive adhesive sheet of the present invention is laminated to an adherend. The separator is not indispensable and may not be provided.

Not specifically defined, examples of the separator include, for example, a separator having a release layer (release-treated layer) on at least one surface of a separator substrate, a low-adhesive separator formed of a fluorine-based polymer, a low-adhesive separator formed of a nonpolar polymer, etc. Not specifically defined, examples of the fluorine-based polymer include, for example, polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer, etc. Also not specifically defined, examples of the nonpolar polymer include, for example, olefinic resins such as polyethylene (PE) and polypropylene (PP). Above all, the separator having a release layer on at least one surface of a separator substrate is preferably used.

Not specifically defined, examples of the separator substrate include plastic films, etc. As the plastic films, examples thereof include plastic films formed of the following material: polyester resins such as polyethylene terephthalate (PET), polyethylene naphthalate (PEN) and polybutylene terephthalate (PBT); olefinic resins using, as the monomer component, an α-olefin such as polyethylene (PE), polypropylene (PP), polymethylpentene (PMP), ethylene-propylene copolymer and ethylene-vinyl acetate copolymer (EVA); polyvinyl chloride (PVC); vinyl acetate resins; polycarbonate (PC); polyphenylene sulfide (PPS); amide resins such as polyamide (nylon) and whole aromatic polyamide (aramid); polyimide resins; polyether ether ketone (PEEK), etc. Above all, the plastic films formed of polyester resins are preferable, from the viewpoint of the processability, the availability, the handleability, the dust-proofness and the cost thereof; and the PET films are more preferable.

As the release-treating agent to constitute the release layer, though not specifically defined, examples thereof include a silicone-based release-treating agent, a fluorine-based release-treating agent, a long-chain alkyl-based release-treating agent, a release treating agent of molybdenum sulfide or the like. Above all, a silicone-based release-treating agent is preferable from the viewpoint of the release control and the stability thereof with time. The release-treating agents may be used alone or in combination of two or more thereof.

The release layer may be a single layer, or may have a laminate structure of two or more layers within a range not detracting from the characteristics of the present invention.

Above all, one preferred example of a concrete configuration of the separator includes a PET film as the separator substrate therein, and has, on at least one surface of the separator substrate, a release layer formed of a silicone-based release-treating agent.

The separator may be formed according to any conventional method. The separator in the present invention may have any other layer (for example, interlayer, undercoating layer, etc.) within a range not detracting from the advantageous effects of the present invention.

Not specifically defined, the thickness of the separator is preferably from 12 to 200 μm, more preferably from 25 to 100 μm, even more preferably from 25 to 75 μm, from the viewpoint of the cost and the handleability of the pressure-sensitive adhesive sheet in lamination operation.

In the case where the pressure-sensitive adhesive sheet of the present invention is a double-separator-type double-sided pressure-sensitive adhesive sheet, a separator is provided on one pressure-sensitive adhesive surface thereof and a separator is also provided on the other pressure-sensitive adhesive surface. In this case, both separators are preferably such that one surface alone of each separator is a release layer (especially separators of such that one surface of a plastic substrate of each separator is a release layer formed of a silicone-based release agent). The separator is provided in such a manner that the release layer thereof could be in contact with the pressure-sensitive adhesive surface of the pressure-sensitive adhesive sheet. Of both surfaces of the separator, the surface on the side opposite to the side thereof to face the pressure-sensitive adhesive surface may be referred to as "back surface" of the separator.

In the case where the pressure-sensitive adhesive sheet of the present invention is a double-separator-type double-sided pressure-sensitive adhesive sheet, it is preferred that there is a difference of a separator peel force between the two separators. For example, in the case where the pressure-sensitive adhesive sheet of the present invention is a double-separator-type double-sided pressure-sensitive adhesive sheet, it is desirable that one separator is used for the pressure-sensitive adhesive surface to be used (laminated) first (this may be referred to as "first surface side") and the other separator is used for the pressure-sensitive adhesive surface to be used (laminated) later (this may be referred to as "second surface side"). Accordingly, it is desirable that one separator is used as a separator on the "light-peeling side" from which the separator can be peeled with a smaller force (peel force) and the other separator is used as a separator on the "heavy-peeling side" from which the separator requires a larger force (peel force) for peeling from the pressure-sensitive adhesive layer. In this description, the separator on the light-peeling side may be referred to as "light-peeling separator" and the separator on the heavy-peeling side may be referred to as "heavy-peeling separator".

In the case where the pressure-sensitive adhesive sheet of the present invention is a single-separator-type double-sided pressure-sensitive adhesive sheet, a separator is provided on one pressure-sensitive adhesive surface thereof, and by winding up them, the other pressure-sensitive adhesive surface can also be protected by the separator. In the case where the pressure-sensitive adhesive sheet of the present invention is a single-separator-type one, preferably, both surfaces of the separator are release layers (release-treated layers). Of the two release layers of the separator, the release layer on the side on which the separator is kept in contact with the pressure-sensitive adhesive surface by winding up them may be specifically referred to as "back release layer". In general, the side of the back release layer of the separator shall face the "first surface side" of the double-sided pressure-sensitive adhesive sheet.

In the case where the pressure-sensitive adhesive sheet of the present invention is a double-sided pressure-sensitive adhesive sheet, it is desirable, from the viewpoint of preventing the occurrence of an erroneous separation phenomenon so as to secure stable use of the pressure-sensitive adhesive sheet, that the peel force (separator peel force) of the separator relative to the pressure-sensitive adhesive layer (for example, the above-mentioned acrylic pressure-sensitive adhesive layer, the above-mentioned rubber-based pressure-sensitive adhesive layer, etc.) on the first surface side (light-peeling side) is from 0.01 to 0.15 N/50 mm and the peel force (separator peel force) of the separator relative to the pressure-sensitive adhesive layer (for example, the above-mentioned acrylic pressure-sensitive adhesive layer, the above-mentioned rubber-based pressure-sensitive adhesive layer, etc.) on the second surface side (heavy-peeling side) is from 0.05 to 0.25 N/50 mm and that the separator peel force on the heavy-peeling surface side is always larger than the separator peel force on the light-peeling surface side.

In particular, in the case where the pressure-sensitive adhesive sheet of the present invention is a double-sided pressure-sensitive adhesive sheet, it is desirable, from the viewpoint of preventing the occurrence of an erroneous separation phenomenon so as to secure stable use of the pressure-sensitive adhesive sheet, that the difference between the peel force (separator peel force) of the heavy-peeling separator relative to the pressure-sensitive adhesive layer and the peel force (separator peel force) of the light-peeling separator relative to the pressure-sensitive adhesive layer is 0.01 to 0.50 N/50 mm, more preferably 0.02 to 0.40 N/50 mm, even more preferably 0.05 to 0.30 N/50 mm, still more preferably 0.06 to 0.25 N/50 mm.

The separator peel force means the 180° peeling pressure-sensitive adhesive force of the separator relative to the pressure-sensitive adhesive layer thereof, which is measured in a 180° peel test. The tensile speed is 300 mm/min.

As the factors of controlling the separator peel force, examples thereof include the type of the release-treating agent, the coating amount of the release-treating agent, the thickness of the separator, etc.
Even if the same separator is used, there may be a case where the difference of peel forces is caused between on the

directly coated surface and on the surface to be laminated. Even if the separators to which the same release treatment has been subjected are used, there may be a case where the difference of peel forces is caused between on the surface thereof on which the pressure-sensitive adhesive has been directly applied in a wet state and on the surface thereof on which the pressure-sensitive adhesive has been laminated by rolling after dried. This would be because of the following reasons. When a pressure-sensitive adhesive is directly applied to a separator in a wet state, the pressure-sensitive adhesive may flow into the voids of fine irregularities on the separator surface to thereby increase the adhesiveness thereof. On the other hand, the pressure-sensitive adhesive after dried could not so much flow into such voids like the case of the pressure-sensitive adhesive in a wet state, and therefore the adhesiveness thereof is not so high. Consequently, even if a separator having undergone the same release treatment is used, there may be a case where there is a peel force difference on both surfaces thereof. As the factors of controlling the separator peel force, examples thereof also include the case where the peel force difference is caused by such reasons.

[Pressure-sensitive adhesive sheet of the present invention]

The pressure-sensitive adhesive sheet of the present invention has at least the substrate and the pressure-sensitive adhesive layer. Preferably, the pressure-sensitive adhesive sheet of the present invention is a double-sided pressure-sensitive adhesive sheet having the pressure-sensitive adhesive layer on both sides of the substrate. More preferably, the pressure-sensitive adhesive sheet of the present invention is a double-separator-type double-sided pressure-sensitive adhesive sheet, which includes the pressure-sensitive adhesive layer on both sides of the substrate and in which the pressure-sensitive adhesive surfaces are protected with a light-peeling separator and a heavy-peeling separator, respectively, until use.

As one concrete embodiment of the pressure-sensitive adhesive sheet of the present invention, for example, there is mentioned a pressure-sensitive adhesive sheet having, on at least one side of a plastic substrate having a thickness of more than 0 μm and less than 2.0 μm, a pressure-sensitive adhesive layer selected from the above-mentioned acrylic pressure-sensitive adhesive layer that contains the above-mentioned acrylic polymer A as the base polymer, or the above-mentioned rubber-based pressure-sensitive adhesive layer.

In the case where the pressure-sensitive adhesive sheet of the present invention is a double-separator-type double-sided pressure-sensitive adhesive sheet, preferable examples thereof include a pressure-sensitive adhesive sheet having, on both sides of a plastic substrate having a thickness of more than 0 μm and less than 2.0 μm, a pressure-sensitive adhesive layer [for example, the above-mentioned acrylic pressure-sensitive adhesive layer (especially the above-mentioned acrylic pressure-sensitive adhesive layer that contains the above-mentioned acrylic polymer A as the base polymer therein), the above-mentioned rubber-based pressure-sensitive adhesive layer, etc.], in which a light-peeling separator is provided to be in contact with one pressure-sensitive adhesive layer while a heavy-peeling separator is provided to be in contact with the other pressure-sensitive adhesive layer, the light-peeling separator is a separator having a release layer formed of a silicone-based release agent on at least one side of a plastic substrate, the heavy-peeling separator is a separator having a release layer formed of a silicone-based release agent on at least one side of a plastic substrate, and the difference between the peel force (separator peel force) of the heavy-peeling separator relative to the pressure-sensitive adhesive layer and the peel force (separator peel force) of the light-peeling separator relative to the pressure-sensitive adhesive layer is 0.01 N/50 mm or more.

Not specifically defined, the thickness (total thickness) of the pressure-sensitive adhesive sheet of the present invention is preferably 1.0 μm or more and less than 30.0 μm, more preferably 1.0 μm or more and less than 10.0 μm, even more preferably from 1.0 μm to 3.0 μm. The thickness thereof does not include the thickness of the separator.

In particular, when the thickness (total thickness) of the pressure-sensitive adhesive sheet of the present invention falls within the above-mentioned range, that is, even when the pressure-sensitive adhesive sheet is thin, since the pressure-sensitive adhesive sheet includes the substrate in the present invention, the pressure-sensitive adhesive sheet of the present invention has the processability (especially punching processability), handling property (handleability) and irregularity-followability. The excellent irregularity-followability is provided by the thickness of more than 0 μm and less than 2.0 μm of the substrate in the invention. In addition, even though the pressure-sensitive adhesive sheet is thin, the pressure-sensitive adhesive sheet has the adhesiveness reliability since the pressure-sensitive adhesive sheet includes the above-mentioned pressure-sensitive adhesive layer (for example, the acrylic pressure-sensitive adhesive layer, the rubber-based pressure-sensitive adhesive layer, etc.).

The pressure-sensitive adhesive sheet of the present invention is favorably for electric or electronic devices, especially for portable electric or electronic devices. Examples of the portable electronic devices include, for example, portable telephones, PHS, smartphones, tablets (tablet computers), mobile computers (mobile PC), personal digital assistants (PDA), electronic organizers, portable broadcasting receivers such as portable TVs and portable radios, portable video game players, portable audio players, portable DVD players, cameras such as digital cameras, video cameras such as camcorders, etc.

The pressure-sensitive adhesive sheet of the present invention is favorably used, for example, in production

of electric or electronic devices, and is more favorably used in production of portable electric or electronic devices. Concretely, the pressure-sensitive adhesive sheet of the present invention is favorably used for bonding members or modules to constitute portable electronic devices to each other, or for fixing members or modules to constitute portable electronic devices to housings. More concretely, examples of the applications include bonding of a cover glass or a lens (especially a glass lens) to a touch panel or a touch sensor, fixation of a cover glass or a lens (especially a glass lens) to a housing, fixation of a display panel to a housing, fixation of an input device such as a sheet-like keyboard or a touch panel to the housing, bonding of the protective panel of an information display part to a housing, bonding of housings to each other, bonding of a housing to a decorative sheet, fixation or bonding of various members or modules to constitute portable electronic devices, etc. In this description, the display panel means a structure including at least a lens (especially a glass lens) and a touch panel. In this description, the lens is a concept that includes both a transparent body having a light-refracting action and a transparent body not having a light-refracting action. In other words, examples of the lens in this description include a mere window panel not having a refracting action. Further in this description, the members or modules to constitute electric or electronic devices may be referred to as "electric or electronic device members".

As described above, the pressure-sensitive adhesive sheet of the present invention is favorably used for fixation of screen displays.

Further, the pressure-sensitive adhesive sheet of the present invention is favorably used for optical applications. Specifically, the pressure-sensitive adhesive sheet of the present invention may be a pressure-sensitive adhesive sheet for optical members (optical pressure-sensitive adhesive sheet). For example, the pressure-sensitive adhesive sheet of the present invention is favorably used for bonding optical members (for optical members bonding application), or in the production of products (optical products) using optical members, etc. Further, the pressure-sensitive adhesive sheet of the present invention is favorably used for fixation of various optical films mentioned below.

The optical member refers to a member having an optical characteristic (for example, a polarized property, a photorefractive property, a light scattering property, a light reflective property, a light transmitting property, a light absorbing property, a light diffractive property, an optical rotation property and visibility). The optical member is not particularly limited so long as the optical member is a member having the optical characteristic, and a member constituting the device (optical device) such as display device (image display device) and input device, or a member used in the device are exemplified, and examples thereof include a polarizing plate, a wave plate, a retardation plate, an optical compensation film, a brightness enhancing film, a light guide plate, a reflective film, an anti-reflective film, a transparent conductive film (e.g. plastic film having an ITO layer on the surface thereof (ITO film) or the like), a design film, a decoration film, a surface protective film, a prism, lens, a color filter, a transparent substrate, and a member in which these are laminated (collectively referred to as "a functional film" in some cases). Each of the "plate" and the "film" include a plate shape, a film shape, and a sheet shape, and for example, the "polarizing film" includes a "polarizing plate" and a "polarizing sheet".

Examples of the display devices include, for example, liquid-crystal display devices, organic EL (electroluminescence) display devices, PDP (plasma display panels), electronic paper, etc. Examples of the above-mentioned input device include touch panels, etc.

Not specifically defined, examples of the optical members include, for example, members formed of glass, acrylic resin, polycarbonate, polyethylene terephthalate, cycloolefin polymer, metal thin film or the like (for example, sheet-like members, film-like members, plate-like members, etc.), etc. As described above, examples of the "optical member" in the present invention also include a member (a design film, a decoration film, a surface protective film or the like) for decoration or protection while maintaining the visibility of the display devices or input devices, which are adherends.

Furthermore, the pressure-sensitive adhesive sheet of the present invention is also favorably used for fixation of radiation sheets, fixation of ferrite sheets, fixation of magnetic shield sheets, etc.

Embodiments of bonding electric or electronic device members with the pressure-sensitive adhesive sheet of the present invention are not specifically defined. Examples thereof include (1) an embodiment where electric or electronic device members are bonded to each other via the pressure-sensitive adhesive sheet of the present invention, (2) an embodiment where an electric or electronic device member is bonded to any other member than electric or electronic device members via the pressure-sensitive adhesive sheet of the present invention, (3) an embodiment where an electric or electronic device member that contains the pressure-sensitive adhesive sheet of the present invention (for example, an electric or electronic device member laminate to be mentioned below) to an electric or electronic device member or to any other member than electric or electronic device members, etc.

Embodiments of bonding optical members with the pressure-sensitive adhesive sheet of the present invention are not specifically defined. Examples thereof include (1) an embodiment where optical members are bonded to each other via the pressure-sensitive adhesive sheet of the present invention, (2) an embodiment where an optical member is bonded to any other member than optical members via the pressure-sensitive adhesive sheet of the present invention, (3) an embodiment where that an optical member contains the pressure-sensitive adhesive sheet of the present invention (for example, an optical member laminate to be mentioned below) to an optical member or to any other member than

optical members, etc.

[Electric or electronic device member laminate]

The electric or electronic device member laminate of the present invention has a laminate configuration of the pressure-sensitive adhesive sheet of the present invention and an electric or electronic device member. In other words, the electric or electronic device member laminate of the present invention contains the pressure-sensitive adhesive sheet of the present invention. When the pressure-sensitive adhesive sheet of the invention that is a double-sided pressure-sensitive adhesive sheet is contained, the electric or electronic device member laminate of the present invention is also a pressure-sensitive adhesive-type electric or electronic device member laminate that has a pressure-sensitive adhesive surface, as provided on at least a part of the surface of the electric or electronic device member (for example, a pressure-sensitive adhesive-type electric or electronic device member laminate that has a pressure-sensitive adhesive surface on at least one side of a sheet-like electric or electronic device member).

Since electric or electronic device member laminate of the present invention includes the pressure-sensitive adhesive sheet of the present invention, the electric or electronic device member laminate of the present invention satisfies irregularity-followability and adhesiveness reliability. Consequently, the laminate is favorably used for fixation or temporary fixation of electronic device members.

[Optical member laminate]

The optical member laminate of the present invention has a laminate configuration of the pressure-sensitive adhesive sheet of the present invention and an optical member. In other words, the optical member laminate of the present invention contains the pressure-sensitive adhesive sheet of the present invention. When the pressure-sensitive adhesive sheet of the invention that is a double-sided pressure-sensitive adhesive sheet is contained, the optical member laminate of the present invention is also a pressure-sensitive adhesive-type optical member laminate that has a pressure-sensitive adhesive surface on at least a part of the surface of the optical member (for example, a pressure-sensitive adhesive-type optical member laminate that has a pressure-sensitive adhesive surface on at least one side of a sheet-like optical member).

Example of the optical member laminate of the present invention include, for example, an optical member containing the pressure-sensitive adhesive sheet of the present invention, a touch panel containing the pressure-sensitive adhesive sheet of the present invention, an image display device containing the pressure-sensitive adhesive sheet of the present invention, a glass lens containing the pressure-sensitive adhesive sheet of the present invention, etc.

Since the optical member laminate of the present invention includes the pressure-sensitive adhesive sheet of the present invention, the optical member laminate of the present invention satisfies irregularity-followability and adhesiveness reliability. Consequently, the laminate is favorably used for fixation or temporary fixation of optical members.

Examples

The present invention is described in more detail based on Examples thereof given below, by which, however, the present invention is not whatsoever limited. Unless otherwise specifically indicated in the following Examples, part by weight means a value calculated in terms of solid content.

(Preparation Example 1 of acrylic polymer solution)

70 parts by weight of n-butyl acrylate (BA), 30 parts by weight of 2-ethylhexyl acrylate (2-EHA), 3 parts by weight of acrylic acid (AA), 0.05 parts by weight of 4-hydroxybutyl acrylate (4-HBA), and as a polymerization initiator, 0.08 parts by weight of azobisisobutyronitrile (AIBN) were added to a toluene solvent. Subsequently, this was polymerized by solution polymerization at 68°C for 8 hours to give an acrylic polymer solution. The weight-average molecular weight of the acrylic polymer was 440,000.
the obtained acrylic polymer solution was referred to as "acrylic polymer solution (A)".

(Preparation Example 1 of acrylic pressure-sensitive adhesive composition)

A polymerized rosin pentaerythritol ester resin (trade name " PENSEL D125", manufactured by Arakawa Chemical Industries, Ltd., having a softening point of 125°C) was added to the acrylic polymer solution (A) so as to be in an amount of 30 parts by weight relative to 100 parts by weight of the acrylic polymer in the solution; and further, an isocyanate-based crosslinking agent (trade name "CORONATE L", manufactured by Nippon Polyurethane Industry Co., Ltd.) was added thereto so as to be in an amount of 2 parts by weight relative to 100 parts by weight of the acrylic

polymer in the solution. In that manner, an acrylic pressure-sensitive adhesive composition was prepared.
The obtained acrylic pressure-sensitive adhesive composition was referred to as "acrylic pressure-sensitive adhesive composition (A)".

(Use Example 1 of substrate)

As the substrate, a PET film having a thickness of 0.5 μm was used. The substrate was referred to as "substrate (A)".

(Use Example 2 of substrate)

As the substrate, a PET film having a thickness of 5 μm was used. The substrate was referred to as "substrate (B)".

(Use Example 3 of substrate)

As the substrate, a PET film having a thickness of 12 μm was used. The substrate was referred to as "substrate (C)".

(Production Example 1 of separator)

A thermosetting addition silicone (trade name "KS-847T", manufactured by Shin-Etsu Chemical Co., Ltd.) and a platinum-based catalyst (trade name "PL-50T", manufactured by Shin-Etsu Chemical Co., Ltd.) were blended, and further toluene was added thereto to give a silicone-based release treating agent having a solid concentration of 1% by weight (solvent-type silicone-based release treating agent). The silicone-based release treating agent was applied onto one surface of a PET film and cured under heat to give a separator (release liner) having a silicone-based release layer on one surface of the PET film.
The obtained separator was referred to as "separator (A)". The separator (A) was used as a separator on a light-peeling surface side (first surface side).

(Production Example 2 of separator)

A thermosetting addition silicone (trade name "KS-3703", manufactured by Shin-Etsu Chemical Co., Ltd.), a release controlling agent (trade name "X-92-183", manufactured by Shin-Etsu Chemical Co., Ltd.) and a platinum-based catalyst (trade name "PL-50T", manufactured by Shin-Etsu Chemical Co., Ltd.) were blended, and further toluene was added thereto to give a silicone-based release treating agent having a solid concentration of 1% by weight (solvent-type silicone-based release treating agent). The silicone-based release treating agent was applied onto one surface of a PET film and cured under heat to give a separator (release liner) having a silicone-based release layer on one surface of the PET film.
The obtained separator was referred to as "separator (B)". The separator (B) was used as a separator on a heavy-peeling surface side (second surface side).

(Example 1)

The acrylic pressure-sensitive adhesive composition (A) was applied onto the separator (A) in such a manner that the final thickness thereof (the thickness of the acrylic pressure-sensitive adhesive layer to be formed) could be 0.8 μm, thereby forming a coating layer, and this was put into an oven and dried under heat at 100°C for 3 minutes to give a sheet 1 having an acrylic pressure-sensitive adhesive layer (thickness 0.8 μm).
Next, the acrylic pressure-sensitive adhesive composition (A) was applied onto the separator (B) in such a manner that the final thickness thereof (the thickness of the acrylic pressure-sensitive adhesive layer to be formed) could be 0.8 μm, thereby forming a coating layer, and this was put into an oven and dried under heat at 100°C for 3 minutes to give a sheet 2 having an acrylic pressure-sensitive adhesive layer (thickness 0.8 μm).
The sheet 2 was laminated to one surface of the substrate (A), and then, the sheet 1 was laminated to the other surface of the substrate (A), thereby giving a double-sided pressure-sensitive adhesive sheet having a pressure-sensitive adhesive layer on both sides of the substrate.
The double-sided pressure-sensitive adhesive sheet has a laminate structure of separator (A) (first surface side)/acrylic pressure-sensitive adhesive layer (thickness 0.8 μm)/substrate (A) (thickness 0.5 μm)/acrylic pressure-sensitive adhesive layer (thickness 0.8 μm)/separator (B) (second surface side).

When the acrylic pressure-sensitive adhesive composition was coated on the separator, a coating apparatus equipped with a pressure-reducing means was used. The coating apparatus is preferred as enabling coating of the acrylic pressure-sensitive adhesive composition with a uniform thickness.

(Example 2)

The acrylic pressure-sensitive adhesive composition (A) was applied onto the separator (A) in such a manner that the final thickness thereof (the thickness of the acrylic pressure-sensitive adhesive layer to be formed) could be 1.2 μm, thereby forming a coating layer, and in the same manner as in Example 1, a sheet 1 having an acrylic pressure-sensitive adhesive layer (thickness 1.2 μm) was produced.
On the other hand, the acrylic pressure-sensitive adhesive composition (A) was applied onto the separator (B) in such a manner that the final thickness thereof (the thickness of the acrylic pressure-sensitive adhesive layer to be formed) could be 1.2 μm, thereby forming a coating layer, and in the same manner as in Example 1, a sheet 2 having an acrylic pressure-sensitive adhesive layer (thickness 1.2 μm) was produced.
Also in the same manner as in Example 1, the sheet 2 was laminated to one surface of the substrate (A), and then, the sheet 1 was laminated to the other surface of the substrate (A), thereby giving a double-sided pressure-sensitive adhesive sheet having a pressure-sensitive adhesive layer on both sides of the substrate.
The double-sided pressure-sensitive adhesive sheet has a laminate structure of separator (A) (first surface side)/acrylic pressure-sensitive adhesive layer (thickness 1.2 μm)/substrate (A) (thickness 0.5 μm)/acrylic pressure-sensitive adhesive layer (thickness 1.2 μm)/separator (B) (second surface side).

(Comparative Example 1)

The acrylic pressure-sensitive adhesive composition (A) was applied onto the separator (B) in such a manner that the final thickness thereof (the thickness of the acrylic pressure-sensitive adhesive layer to be formed) could be 3.0 μm, thereby forming a coating layer. Next, the separator (A) was provided on the coating layer to cover the coating layer. Next, using a black light (manufactured by Toshiba Corporation), this was irradiated with UV rays at an illumination intensity of 5 $mW/cm^2$, thereby giving a substrateless double-sided pressure-sensitive adhesive sheet having an acrylic pressure-sensitive adhesive layer (thickness 3.0 μm).
The double-sided pressure-sensitive adhesive sheet has a laminate structure of separator (A) (first surface side)/acrylic pressure-sensitive adhesive layer (thickness 3.0 μm)/separator (B) (second surface side).

(Comparative Example 2)

The acrylic pressure-sensitive adhesive composition (A) was applied onto the separator (A) in such a manner that the final thickness thereof (the thickness of the acrylic pressure-sensitive adhesive layer to be formed) could be 0.5 μm, thereby forming a coating layer, and in the same manner as in Example 1, a sheet 1 having an acrylic pressure-sensitive adhesive layer (thickness 0.5 μm) was produced.
On the other hand, the acrylic pressure-sensitive adhesive composition (A) was applied onto the separator (B) in such a manner that the final thickness thereof (the thickness of the acrylic pressure-sensitive adhesive layer to be formed) could be 0.5 μm, thereby forming a coating layer, and in the same manner as in Example 1, a sheet 2 having an acrylic pressure-sensitive adhesive layer (thickness 0.5 μm) was produced.
Also in the same manner as in Example 1, the sheet 1 was laminated to one surface of the substrate (B), and then, the sheet 2 was laminated to the other surface of the substrate (B), thereby giving a double-sided pressure-sensitive adhesive sheet having a pressure-sensitive adhesive layer on both sides of the substrate.
The double-sided pressure-sensitive adhesive sheet has a laminate structure of separator (A) (first surface side)/acrylic pressure-sensitive adhesive layer (thickness 0.5 μm)/substrate (B) (thickness 5 μm)/acrylic pressure-sensitive adhesive layer (thickness 0.5 μm)/separator (B) (second surface side).

(Comparative Example 3)

The acrylic pressure-sensitive adhesive composition (A) was applied onto the separator (A) in such a manner that the final thickness thereof (the thickness of the acrylic pressure-sensitive adhesive layer to be formed) could be 1.5 μm, thereby forming a coating layer, and in the same manner as in Example 1, a sheet 1 having an acrylic pressure-sensitive adhesive layer (thickness 1.5 μm) was produced.
On the other hand, the acrylic pressure-sensitive adhesive composition (A) was applied onto the separator (B) in such a manner that the final thickness thereof (the thickness of the acrylic pressure-sensitive adhesive layer to be formed) could be 1.5 μm, thereby forming a coating layer, and in the same manner as in Example 1, a sheet 2 having an acrylic

pressure-sensitive adhesive layer (thickness 1.5 μm) was produced.
Also in the same manner as in Example 1, the sheet 1 was laminated to one surface of the substrate (C), and then, the sheet 2 was laminated to the other surface of the substrate (C), thereby giving a double-sided pressure-sensitive adhesive sheet having a pressure-sensitive adhesive layer on both sides of the substrate.
The double-sided pressure-sensitive adhesive sheet has a laminate structure of separator (A) (first surface side)/acrylic pressure-sensitive adhesive layer (thickness 1.5 μm)/substrate (C) (thickness 12 μm)/acrylic pressure-sensitive adhesive layer (thickness 1.5 μm)/separator (B) (second surface side).

(Measurement or Evaluation)

The double-sided pressure-sensitive adhesive sheets obtained in Examples and Comparative Examples were analyzed or evaluated as follows. The results are shown in Table 1.

(180° Peel adhesion strength (pressure-sensitive adhesive force))

From the double-sided pressure-sensitive adhesive sheet, a sheet piece having a length of 100 mm and a width of 20 mm was cut. Next, the separator (A) was peeled from the sheet piece, and a PET film (trade name "LUMIRROR S-10" having a thickness of 25 μm) was laminated (lined) to the exposed pressure-sensitive adhesive surface. A sample piece was thus prepared.
Next, the separator (B) was peeled from the sample piece, and the sample piece was laminated to a test board via the exposed pressure-sensitive adhesive surface, and they were pressure-bonded by moving a 2-kg roller back and fore once. Subsequently, this was aged in an atmosphere at 23°C and 50% RH for 30 minutes. After aged, the sample piece was peeled from the test board in an atmosphere at 23°C and 50% RH using a tensile tester (apparatus name "AUTOGRAPH AG-IS", manufactured by Shimadzu Corporation) under the conditions of a tension speed of 300 mm/min and a peel angle of 180°, thereby measuring the peel adhesion strength (N/20 mm).
As the test board, a stainless plate (SUS 304BA plate) was used. The surface of the test board was flat and smooth.

(Irregularity-followability)

The separator (A) was peeled from the double-sided pressure-sensitive adhesive sheet, and a PET film (trade name "LUMIRROR S-10" having a thickness of 25 μm) was laminated (lined) onto the exposed pressure-sensitive adhesive surface of the sheet, thereby preparing a sample piece.
Next, the separator (B) was peeled from the sample piece, and the sample piece was laminated to the surface of an adherend, in which the surface had a step, via the exposed pressure-sensitive adhesive surface, and they were pressure-bonded by moving a 2-kg roller back and forth once. Subsequently, this was aged in an atmosphere at 23°C and 50% RH for 30 minutes. Thus, a structure A was obtained.
The sample piece around the step in the structure A was visually checked, and evaluated according to the following standards.

Evaluation Standards

Good (A): The pressure-sensitive adhesive sheet followed the step, and no lift-off phenomenon was seen.
Bad (B): The pressure-sensitive adhesive sheet could not follow the step, and a lift-off phenomenon was seen.

The adherend used in evaluation of irregularity-followability was a sheet-like adherend, and has a step on one surface thereof. The height of the step was 10 μm.

(Punching processability)

Using a die-cutting machine (apparatus name "D250", manufactured by Iwasaki Tekko Co., Ltd.), the double-sided pressure-sensitive adhesive sheet was die-cut from one side thereof via the sealing blade of the machine at a rate of 100 shots/min.
The die-cut double-sided pressure-sensitive adhesive sheet was observed and evaluated according to the following evaluation standards.

Evaluation Standards:

The die-cut double-sided pressure-sensitive adhesive sheet was observed and checked for the presence or absence of wrinkles, twists, damages, adhesive-bleeding at the edge parts of the pressure-sensitive adhesive sheet. The samples in which the pressure-sensitive adhesive sheets unintentionally bonded together owing to damages or adhesive-bleeding were evaluated as bad (B). On the other hand, the samples that had been cleanly die-cut with no such problems were evaluated as good (A).

(Separator peel force)

From the double-sided pressure-sensitive adhesive sheet, a sheet piece having a length of 100 mm and a width of 50 mm was sampled to thereby prepare a sample piece. The sample piece is referred to as a sample piece for first surface side evaluation.
The separator (A) was peeled from the sample piece for first surface side evaluation, and a PET film (trade name "LUMIRROR S-10" having a thickness of 25 μm) was laminated (lined) to the exposed pressure-sensitive adhesive surface to thereby prepare a sample piece for second surface side evaluation.
Using a tensile tester (apparatus name "AUTOGRAPH AG-IS", manufactured by Shimadzu Corporation), the separator (A) was peeled from the sample piece for first surface side evaluation, in an atmosphere at 23°C and 50% RH under the condition of a tension speed of 300 mm/min and a peel angle of 180°, thereby measuring the 180° peel adhesion strength (N/50 mm). The 180° peel adhesion strength is referred to as the separator peel force on the first surface side.
On the other hand, using a tensile tester (apparatus name "AUTOGRAPH AG-IS", manufactured by Shimadzu Corporation), the separator (B) was peeled from the sample piece for second surface side evaluation, in an atmosphere at 23°C and 50% RH under the condition of a tension speed of 300 mm/min and a peel angle of 180°, thereby measuring the 180° peel adhesion strength (N/50 mm). The 180° peel adhesion strength is referred to as the separator peel force on the second surface side.

(Separator releasability)

In the separator peel force test, the test sample was evaluated in point of the presence or absence of an erroneous separation phenomenon, removal of pressure-sensitive adhesive layer to separator (adhesive peel), overlapping of pressure-sensitive adhesive layers, unintentional movement of pressure-sensitive adhesive layer, wrinkling or twisting of pressure-sensitive adhesive layer owing to such movement, damage to pressure-sensitive adhesive sheet, etc. The samples with such failures were evaluated as bad (B). On the other hand, the samples in which the separator peeled cleanly from the pressure-sensitive adhesive layer at the interface therebetween and which were therefore free from those failures were evaluated as good (A).

Table 1

| | | Example 1 | Example 2 | Comparative Example 1 | Comparative Example 2 | Comparative Example 3 |
|---|---|---|---|---|---|---|
| Plastic Substrate (μm) | | 0.5 | 0.5 | - | 5 | 12 |
| Total Thickness (μm) | | 2.0 | 3.0 | 3.0 | 6.0 | 15.0 |
| 180° Peel Adhesion Strength (N/20 mm) | | 1.5 | 3.5 | 7.0 | 0.3 | 5.0 |
| Irregularity-followability | | A | A | A | B | B |
| Punching processability | | A | A | B | A | A |
| Separator Releasability | first surface side | A | A | B | A | A |
| | second surface side | A | A | B | A | A |

(continued)

| | | Example 1 | Example 2 | Comparative Example 1 | Comparative Example 2 | Comparative Example 3 |
|---|---|---|---|---|---|---|
| Separator Peel Force (N/50 mm) | first surface side | 0.05 | 0.07 | unmeasurable | 0.04 | 0.08 |
| | second surface side | 0.11 | 0.14 | unmeasurable | 0.09 | 0.15 |

The separator peel force in Comparative Example 1 was unmeasurable.

While the invention has been described in detail and with reference to specific embodiments thereof, it will be apparent to one skilled in the art that various changes and modifications can be made therein without departing from the spirit and scope thereof.

This application is based on Japanese Patent Application No. 2012-160179 filed on July 19, 2012, the entire subject matter of which is incorporated herein by reference.

## Claims

1. A pressure-sensitive adhesive sheet, comprising a plastic substrate having a thickness of more than 0 μm and less than 2.0 μm and a pressure-sensitive adhesive layer on at least one side of the plastic substrate, wherein:

    the pressure-sensitive adhesive layer contains an acrylic polymer or a rubber-based polymer in an amount of 50 wt% or more relative to a total amount of the pressure-sensitive adhesive layer (100 wt%), and
    the acrylic polymer is formed of a monomer mixture containing the following (m1) in an amount of from 50.0 to 99.8 wt% relative to a total amount of monomer components (100 wt%) and the following (m2) in an amount of from 0.01 to 20 wt% relative to the total amount of monomer components (100 wt%):

    (m1): an alkyl (meth)acrylate monomer having an alkyl group with from I to 10 carbon atoms, which is represented by the following formula (1),

    $$CH_2=C(R^1)COOR^2 \qquad (1)$$

    wherein $R^1$ represents a hydrogen atom or a methyl group, and $R^2$ represents an alkyl group with from 1 to 10 carbon atoms;
    (m2): a polar group-containing monomer.

2. The pressure-sensitive adhesive sheet according to claim 1, wherein:

    the pressure-sensitive adhesive layer contains the acrylic polymer, and
    the monomer mixture contains, as the (m1), an alkyl (meth)acrylate monomer having an alkyl group with from 1 to 5 carbon atoms and an alkyl (meth)acrylate monomer having an alkyl group with from 6 to 10 carbon atoms.

3. The pressure-sensitive adhesive sheet according to claim 1 or 2,
    wherein the (m2) is at least one monomer selected from the group consisting of a vinyl-based monomer having a nitrogen atom in a skeleton thereof, a vinyl-based monomer having a carboxyl group in a skeleton thereof, and a vinyl-based monomer having a hydroxyl group in a skeleton thereof.

4. The pressure-sensitive adhesive sheet according to claim 3, wherein the vinyl-based monomer having a hydroxyl group in a skeleton thereof is a hydroxyalkyl (meth)acrylate.

5. The pressure-sensitive adhesive sheet according to any one of claims 1 to 4, wherein the pressure-sensitive adhesive layer contains a crosslinking agent in an amount of from 0.001 to 10 parts by weight relative to 100 parts by weight of the acrylic polymer or the rubber-based polymer.

**6.** The pressure-sensitive adhesive sheet according to any one of claims 1 to 5, wherein the pressure-sensitive adhesive layer contains a tackifying resin in an amount of from 5 to 60 parts by weight relative to 100 parts by weight of the acrylic polymer or the rubber-based polymer.

**7.** The pressure-sensitive adhesive sheet according to any one of claims 1 to 6, having the pressure-sensitive adhesive layer on both sides of the plastic substrate.

**8.** The pressure-sensitive adhesive sheet according to any one of claim 1 to 7, comprising the plastic substrate having a thickness of more than 0 μm and less than 2.0 μm, an acrylic pressure-sensitive adhesive layer A on one side of the plastic substrate and an acrylic pressure-sensitive adhesive layer B on the other side of the plastic substrate, wherein:

a separator A is provided so as to be in contact with the acrylic pressure-sensitive adhesive layer A and a separator B is provided so as to be in contact with the acrylic pressure-sensitive adhesive layer B,
the separator A has a release layer formed of a silicone-based release agent,
the separator B has a release layer formed of a silicone-based release agent, and
a difference between a peel force of the separator B relative to the acrylic pressure-sensitive adhesive layer B and a peel force of the separator A relative to the acrylic pressure-sensitive adhesive layer A is 0.01 N/50 mm or more and 0.50 N/50 mm or less.

**9.** A pressure-sensitive adhesive sheet, comprising a plastic substrate having a thickness of more than 0 μm and less than 2.0 μm, an acrylic pressure-sensitive adhesive layer A on one side of the plastic substrate and an acrylic pressure-sensitive adhesive layer B on the other side of the plastic substrate, wherein:

a separator A is provided so as to be in contact with the acrylic pressure-sensitive adhesive layer A and a separator B is provided so as to be in contact with the acrylic pressure-sensitive adhesive layer B,
the separator A has a release layer formed of a silicone-based release agent,
the separator B has a release layer formed of a silicone-based release agent, and
a difference between a peel force of the separator B relative to the acrylic pressure-sensitive adhesive layer B and a peel force of the separator A relative to the acrylic pressure-sensitive adhesive layer A is 0.01 N/50 mm or more and 0.50 N/50 mm or less.

**10.** The pressure-sensitive adhesive sheet according to any one of claims 1 to 9, which is for an electric or electronic device.

**11.** The pressure-sensitive adhesive sheet according to any one of claims 1 to 9, which is for an optical member.

**12.** An electric or electronic device member laminate, having a laminate configuration of the pressure-sensitive adhesive sheet according to any one of claims 1 to 9 and an electric or electronic device member.

**13.** An optical member laminate, having a laminate configuration of the pressure-sensitive adhesive sheet according to any one of claims 1 to 9 and an optical member.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005105212 A
- JP 2002069411 A
- JP 2012160179 A